(19)

**Europäisches Patentamt**

**European Patent Office**

**Office européen des brevets**

(11) **EP 4 550 580 A1**

(12) **EUROPEAN PATENT APPLICATION**
published in accordance with Art. 153(4) EPC

(43) Date of publication:
07.05.2025 Bulletin 2025/19

(21) Application number: 22948652.7

(22) Date of filing: 30.06.2022

(51) International Patent Classification (IPC):
*H01Q 15/00* (2006.01)

(52) Cooperative Patent Classification (CPC):
H01Q 15/00

(86) International application number:
PCT/CN2022/103196

(87) International publication number:
WO 2024/000550 (04.01.2024 Gazette 2024/01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **NI, Rui**
**Shenzhen, Guangdong 518129 (CN)**
• **ZHU, Qian**
**Shenzhen, Guangdong 518129 (CN)**
• **YANG, Ganghua**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS USING HUYGENS EQUIVALENT SURFACE**

(57) This application provides a communication method and apparatus applying a Huygens equivalent surface, to increase energy of a wanted signal and a degree of freedom of a spatial channel, and improve communication performance. The method includes: A receive end receives a first receiving signal based on a first Huygens equivalent surface. The receive end may further send first indication information. The first indication information includes indication information of at least one Huygens equivalent surface, the indication information of the at least one Huygens equivalent surface is determined based on a second Huygens equivalent surface, and the second Huygens equivalent surface corresponds to the first receiving signal.

```
     ┌──────────┐              ┌──────────┐
     │ Transmit │              │ Receive  │
     │   end    │              │   end    │
     └────┬─────┘              └────┬─────┘
          │                         │
          │              ┌─────────────────────────┐
          │              │ S101: Receive a first    │
          │              │ receiving signal based   │
          │              │ on a first Huygens       │
          │              │ equivalent surface       │
          │              └─────────────────────────┘
          │                         │
          │  S102: First indication │
          │  information, including  │
          │  indication information  │
          │  of at least one         │
          │  Huygens equivalent surface
          │◄────────────────────────│
          │                         │
```

FIG. 11

EP 4 550 580 A1

**Description**

**TECHNICAL FIELD**

This application relates to the field of mobile communication technologies, and in particular, to a communication method and apparatus applying a Huygens equivalent surface.

**BACKGROUND**

A multi-input multi-output (multi-input multi-output, MIMO)-orthogonal frequency division multiplexing (orthogonal frequency division multiplexing, OFDM) technology represented by 4th generation (4th generation, 4G) mobile communication/5th generation (5th generation, 5G) mobile communication of the 3rd generation partnership project (3rd generation partnership project, 3GPP) is a wireless communication system that uses a phased array antenna as a hardware basis and implements wireless communication in time, frequency, and space dimensions by using unified and reasonable scheduling and a signal processing algorithm on a base station side. In 4G/5G, an orthogonal frequency division multiple access (orthogonal frequency division multiplexing access, OFDMA) time-frequency resource block (resource block, RB) and a phased array with beam zero-forcing (zero-forcing, ZF) policies in different directions are used to implement flexible and efficient multi-user multiple access communication.

However, in a current multi-user access process, all energy of a wanted signal and all degrees of freedom of a spatial channel cannot be fully utilized, and communication performance needs to be further improved.

**SUMMARY**

This application provides a communication method and an apparatus applying a Huygens equivalent surface, to fully utilize energy of a wanted signal and a degree of freedom of a spatial channel, and improve communication performance.

According to a first aspect, this application provides a communication method applying a Huygens equivalent surface, to increase energy of a wanted signal and a degree of freedom of a spatial channel, and improve communication performance. The method may be implemented by a receive end, and the receive end may be a device or an apparatus that receives a reference signal and/or data, performs channel measurement, and sends feedback information. For example, the receive end may be implemented by a terminal device, a network device, a component in a terminal device, or a component in a network device. The component in this application may include, for example, at least one of a processor, a transceiver, a processing unit, or a transceiver unit. For example, the method is performed by a receive end. The method may be implemented in the following steps: A receive end receives a first receiving signal based on a first Huygens equivalent surface. The receive end may further send first indication information. The first indication information includes indication information of at least one Huygens equivalent surface, the indication information of the at least one Huygens equivalent surface is determined based on a second Huygens equivalent surface, and the second Huygens equivalent surface corresponds to the first receiving signal. Therefore, the first indication information is used as the feedback information, and may indicate a channel measurement result determined by the receive end. For example, a transmit end may determine a transmit antenna configuration and/or a receive antenna configuration in a subsequent transmission process based on the first indication information. It may be understood that, the method according to the first aspect does not depend on beam selection, that is, energy in an unselected beam direction is not discarded in a channel measurement process. Therefore, in the method, utilization of energy of a wanted signal and a degree of freedom of a spatial channel can be increased, and communication performance can be improved.

In a possible design, the second Huygens equivalent surface is an electric field vector and/or a magnetic field vector of a closed surface in three-dimensional space in which a receive antenna is located, and the receive end may further receive second indication information, where the second indication information indicates that the first Huygens equivalent surface is the electric field vector and/or the magnetic field vector of the closed surface in three-dimensional space in which the receive antenna is located. The first Huygens equivalent surface may be understood as an electric field vector and/or a magnetic field vector in space near the receive antenna when an antenna at the receive end transmits an electromagnetic wave to the outside by using the antenna at the receive end after the antenna at the receive end sets an antenna configuration parameter (or referred to as the receive antenna configuration) according to guidance of the second indication information. The second Huygens equivalent surface may be understood as an electric field vector and/or a magnetic field vector formed in space near a receive antenna in a process of propagation of a radio electromagnetic wave emitted by an antenna at the transmit end through a wireless channel, and may represent an effect of jointly affecting the first receiving signal by a transmit antenna configuration, wireless channel propagation, and a receive antenna configuration. It may be understood that, both the first Huygens equivalent surface and the second Huygens equivalent surface are the electric field vectors of the closed surface in three-dimensional space in which the receive antenna is located, or both the first Huygens equivalent surface and the second Huygens equivalent surface are the magnetic field vectors of the closed surface in three-dimensional space in which the receive antenna is located, or both the first Huygens equivalent surface and the second Huygens equivalent surface are the electric field vectors and the magnetic field vectors of the closed surface in three-dimensional space in which the receive antenna is located. In other words, the receive end may determine, based on the second indication information, that the second Huygens equivalent surface is the electric field vector and/or the magnetic field vector of the closed surface in three-dimensional space in which the receive antenna is located.

In a possible design, the indication information of any one of the Huygens equivalent surfaces includes an index of the Huygens equivalent surface and at least one of the following parameters corresponding to the index: a normalized cross correlation coefficient between the Huygens equivalent surface and the second Huygens equivalent surface, a compression rate, and a solid angle range. In this implementation, the receive end may perform feedback by using a correspondence between the index and at least one of the normalized cross correlation coefficient, the compression rate, and the solid angle range, to improve feedback flexibility.

In a possible design, a larger absolute value of the normalized cross correlation coefficient indicates a higher transmission priority of the indication information of the Huygens equivalent surface. According to the design, when feedback resources are limited, information of a Huygens equivalent surface with a large absolute value of the normalized cross correlation coefficient may only be fed back to the transmit end. This part of the Huygens equivalent surface may be used to describe the second Huygens equivalent surface more accurately, so that the transmit end can determine a configuration or a parameter for subsequent transmission more accurately. Therefore, channel measurement and feedback precision can be improved, and transmission performance can be improved.

In a possible design, the receive end may determine, based on the first receiving signal, a three-dimensional Huygens equivalent surface corresponding to the first receiving signal, and use, as the second Huygens equivalent surface, a two-dimensional Huygens equivalent surface obtained through projection of the three-dimensional Huygens equivalent surface. Data processing on the two-dimensional Huygens equivalent surface can be performed, to reduce difficulty of data processing. Therefore, in this design, channel measurement and feedback efficiency can be improved.

In a possible design, the receive end may further obtain the second Huygens equivalent surface based on a first compression rate corresponding to the first Huygens equivalent surface, where the first compression rate is related to a size of a solid angular granularity of the second Huygens equivalent surface, and the first compression rate is greater than 0 and less than or equal to 1. According to the design, a data processing amount can be reduced. Therefore, in this design, channel measurement and feedback efficiency can be improved.

In a possible design, the first receiving signal is a receiving signal received in an $n^{th}$ transmission cycle of a period of coherence time, the coherence time includes N transmission cycles, $1 \leq n \leq N$, and n is an integer. Therefore, the receive end may perform measurement and feedback for a plurality of times within the period of coherence time, so that the transmit end can pre-determine an optimal region of interest (that is, the solid angle range) of the Huygens equivalent surface in a next period of time, to mitigate deterioration of received signal quality caused by a change of a relative position between the receive end and the transmit end.

In a possible design, the receive end may further receive second information, where the second information indicates N and/or a time interval between the N transmission cycles; or the receive end may further send third information, where the second information indicates N and/or a time interval between the N transmission cycles. According to the design, the receive end and the transmit end may negotiate a quantity of measurement times or a period interval of a quantity of times within the period of coherence time, to improve sampling flexibility.

In a possible design, the first indication information includes a parameter variation of the indication information of the at least one Huygens equivalent surface relative to feedback information sent last time. According to the design, data volume of the feedback information can be reduced, to reduce air interface overheads of the feedback information.

In a possible design, the first receiving signal includes a first reference signal, and the first reference signal is a default reference signal in an enabled state of an RIS; or the first receiving signal includes a second reference signal, and the second reference signal is a default reference signal in a disabled state of an RIS. According to the method, channel measurement and feedback can be accurately implemented in a scenario in which the transmit end communicates with the receive end by using the RIS.

According to a second aspect, this application provides a communication method applying a Huygens equivalent surface, to increase energy of a wanted signal and a degree of freedom of a spatial channel, and improve communication performance. The method may be implemented by a transmit end. The transmit end may be a device or an apparatus that sends a reference signal and/or data, and the reference signal and/or the data may be used for channel measurement. For example, the receive end may be implemented by a terminal device, a network device, a component in a terminal device, or a component in a network device. The component in this application may include, for example, at least one of a processor, a transceiver, a processing unit, or a transceiver unit. For example, the method is performed by a transmit end. The method may be implemented in the following steps: A transmit end sends a first receiving signal. The transmit end receives first indication information, where the first indication information includes indication information of at least one Huygens equivalent surface, the indication information of the at least one Huygens equivalent surface is determined based on a second Huygens equivalent surface, and the second Huygens equivalent surface corresponds to the first receiving signal.

In a possible design, the second Huygens equivalent surface is an electric field vector and/or a magnetic field vector of a closed surface in three-dimensional space in which a receive antenna is located, and the transmit end may further send second indication information, where the second indication information indicates that the first Huygens equivalent surface is the electric field vector and/or the magnetic field vector of the closed surface in three-dimensional space in which the receive antenna is located.

In a possible design, the indication information of any one of the Huygens equivalent surfaces includes an index of the Huygens equivalent surface and at least one of the following parameters corresponding to the index: a normalized cross correlation coefficient between the Huygens equivalent surface and the second Huygens equivalent surface, a compression rate, and a solid angle range.

In a possible design, a larger absolute value of the normalized cross correlation coefficient indicates a higher transmission priority of the indication information of the Huygens equivalent surface.

In a possible design, the second Huygens equivalent surface is obtained based on a first compression rate, the first compression rate is related to a size of a solid angular granularity of the second Huygens equivalent surface, and the first compression rate is greater than 0 and less than or equal to 1.

In a possible design, the first receiving signal is a receiving signal received in an nth transmission cycle of a period of coherence time, the coherence time includes N transmission cycles, $1 \leq n \leq N$, and n is an integer.

In a possible design, the transmit end may further send second information, where the second information indicates N and/or a time interval between the N transmission cycles; or the transmit end may further receive third information, where the second information indicates N and/or a time interval between the N transmission cycles.

In a possible design, the first indication information includes a parameter variation of the indication information of the at least one Huygens equivalent surface relative to feedback information sent last time.

In a possible design, the first receiving signal includes a first reference signal, and the first reference signal is a default reference signal in an enabled state of a reconfigurable intelligent surface RIS; or the first receiving signal includes a second reference signal, and the second reference signal is a default reference signal in a disabled state of an RIS.

According to a third aspect, a communication apparatus applying a Huygens equivalent surface is provided. The apparatus may implement the method according to the first aspect and any one of the possible designs of the first aspect. The apparatus has a function of the foregoing receive end. The apparatus is, for example, a receive end, or a functional module in the receive end.

Alternatively, the apparatus may implement the method according to the second aspect and any one of the possible designs of the second aspect. The apparatus has a function of the foregoing transmit end. The apparatus is, for example, a transmit end, or a functional module in the transmit end.

In an optional implementation, the apparatus may include a one-to-one corresponding module for performing the method/operation/step/action described in the first aspect or the second aspect. The module may be a hardware circuit, or may be software, or may be implemented by a hardware circuit in combination with software. In another optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for the functional modules.

For example, when the apparatus is configured to perform the method described in the first aspect, the apparatus may include a receiving unit and a sending unit. The receiving unit may be configured to receive a first receiving signal based on a first Huygens equivalent surface. The sending unit may be configured to send first indication information. For the first receiving signal and the first indication information, refer to the descriptions in the first aspect.

In addition, optionally, the receiving unit may be configured to receive second indication information.

Optionally, the apparatus may further include a processing unit, configured to obtain a second Huygens equivalent surface. For example, the processing unit may be configured to obtain the second Huygens equivalent surface based on a first compression rate corresponding to the first Huygens equivalent surface. For the first compression rate, refer to the descriptions in the first aspect.

Optionally, the receiving unit may be further configured to receive second information, or the sending unit may be further configured to send third information. For the second information and the third information, refer to the descriptions in the first aspect.

For example, when the apparatus is configured to perform the method described in the second aspect, the apparatus may include a receiving unit and a sending unit. The sending unit may be configured to send a first receiving signal. The receiving unit may be configured to receive first indication information. For the first receiving signal and the first indication information, refer to the descriptions in the second aspect.

In addition, optionally, the sending unit may be configured to send second indication information.

Optionally, the sending unit may be further configured to send second information, or the receiving unit may be further configured to receive third information. For the second information and the third information, refer to the descriptions in the first aspect.

For another example, the apparatus may include a processor, coupled to a memory, and configured to execute instructions in the memory, to implement the method according to the first aspect or the second aspect. Optionally, the apparatus further includes other components, for example, an antenna, an input/output module or interface, and the like. Such components may be hardware, software, or a combination of software and hardware.

According to a fourth aspect, a computer-readable storage medium is provided. The computer-readable storage medium is configured to store a computer program or instructions, and when the computer program or the instructions are run, the method according to either of the first aspect or the second aspect is implemented.

According to a fifth aspect, a computer program product including instructions is provided. When the computer program product is run on a computer, the method according to either of the first aspect or the second aspect is implemented.

According to a sixth aspect, a chip system is provided. The chip system includes a logic circuit (or is understood as that the chip system includes a processor, and the processor may include a logic circuit or the like), and may further include an input/output interface. The input/output interface may be configured to receive a message, or may be configured to send a message. For example, when the chip system is configured to implement a function of the receive end, the input/output interface may be configured to receive a first receiving signal based on a first Huygens equivalent surface, and/or send first indication information. The input/output interface may be a same interface, that is, a same interface can implement both a sending function and a receiving function. Alternatively, the input/output interface includes an input interface and an output interface. The input interface is configured to implement a receiving function, that is, is configured to receive a message. The output interface is configured to implement a sending function, that is, is configured to send a message. The logic circuit may be configured to perform an operation other than a transceiver function in the first aspect and the second aspect. The logic circuit may be further configured to transmit a message to the input/output interface, or receive a message from another communication apparatus from the input/output interface. The chip system may be configured to implement the method according to either of the first aspect or the second aspect. The chip system may include a chip, or may include a chip and another discrete component.

Optionally, the chip system may further include a memory. The memory may be configured to store instructions, and the logic circuit may invoke the instructions stored in the memory to implement a corresponding function.

According to a seventh aspect, a communication system is provided. The communication system may include a receive end and a transmit end. The receive end may be configured to perform the method performed by the receive end in the first aspect, and the transmit end may be configured to perform the method performed by the transmit end in the second aspect. Alternatively, the communication system may include an apparatus configured to perform the method according to the first aspect, and include an apparatus configured to perform the method according to the second aspect.

For technical effects brought by the second aspect to the seventh aspect, refer to the descriptions in the first aspect. Details are not described herein again.

## BRIEF DESCRIPTION OF DRAWINGS

FIG. 1 is a diagram of an architecture of a wireless communication system according to this application;
FIG. 2 is a diagram of a PMI codebook feedback manner;
FIG. 3 is a diagram of a channel measurement manner based on beam selection;
FIG. 4 is a diagram of a multi-layer antenna array structure;
FIG. 5 is a diagram of a structure of a communication system according to this application;
FIG. 6 is a diagram of a Huygens equivalent surface;
FIG. 7 is a diagram of a distribution manner of antenna array elements according to this application;
FIG. 8 is a diagram of a storage manner of a Huygens equivalent surface blueprint according to this application;
FIG. 9(a) is a diagram of a geometric topology of an antenna element corresponding to a Huygens equivalent surface blueprint according to this application;
FIG. 9(b) is a diagram of a Huygens pattern in a three-dimensional sphere according to this application;
FIG. 9(c) is a diagram of a three-dimensional Huygens equivalent surface according to this application;
FIG. 9(d) is a diagram of a two-dimensional Huygens equivalent surface according to this application;

FIG. 10(a) is a diagram of a three-dimensional Huygens equivalent surface and a corresponding two-dimensional Huygens equivalent surface according to this application;

FIG. 10(b) is a diagram of another three-dimensional Huygens equivalent surface and a corresponding two-dimensional Huygens equivalent surface according to this application;

FIG. 10(c) is a diagram of another three-dimensional Huygens equivalent surface and a corresponding two-dimensional Huygens equivalent surface according to this application;

FIG. 11 is a schematic flowchart of a communication method according to this application;

FIG. 12 is a diagram of a change of a Huygens equivalent surface in an RIS scenario according to this application;

FIG. 13 is a schematic flowchart of another communication method according to this application;

FIG. 14 is a diagram of a structure of a communication apparatus according to this application;

FIG. 15 is a diagram of a structure of another communication apparatus according to this application; and

FIG. 16 is a diagram of a structure of another communication apparatus according to this application.

## DESCRIPTION OF EMBODIMENTS

The following describes technical solutions in embodiments of this application with reference to accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. At least one of the following items (pieces) or a similar expression thereof indicates any combination of these items, including any combination of a single item (piece) or a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically a same function or purpose. A person skilled in the art may understand that the terms such as "first" and "second" do not limit a quantity or an execution sequence, and the terms such as "first" and "second" do not indicate a definite difference.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

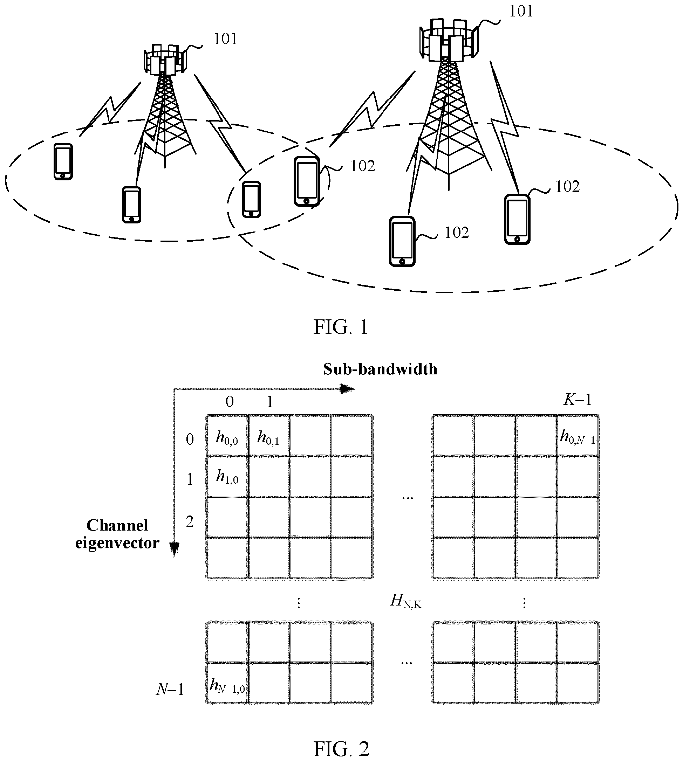

For ease of understanding embodiments of this application, a communication system shown in FIG. 1 is first used as an example to describe a communication system to which an embodiment of this application is applicable. FIG. 1 shows a possible architecture of a communication system that may be applied to a method provided in an embodiment of this application. The architecture of the communication system includes a network device 101 and at least one terminal device 102. The network device may establish a communication link to at least one terminal device (for example, a terminal device 1 and a terminal device 2 shown in the figure) by using beams in different directions. The network device may provide a radio access-related service for the at least one terminal device, to implement one or more of the following functions: a wireless physical layer function, resource scheduling and wireless resource management, quality of service (QoS) management, radio access control, and a mobility management function. The at least one terminal device may alternatively form a beam for data transmission with the network device. In this embodiment, the network device may communicate with the at least one terminal device by using the beam.

It should be understood that, the network device in embodiments of this application may be any device having a wireless transceiver function or a chip that may be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB (home evolved NodeB), or a home NodeB (home NodeB, HNB)), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP/TP), a remote radio head (remote radio head, RRH), or the like, or may be a gNodeB (gNB) or a transmission point in a 5G system, for example, an NR system, or one antenna panel or one group of antenna panels (including a plurality of antenna panels) of a base station in a 5G system, or may be a network node that serves as a gNB or a transmission point, for example, a baseband unit, a distributed unit (distributed unit, DU), a satellite, an uncrewed aerial vehicle, or the like. Alternatively, the network device may be a radio controller in a cloud radio access network (cloud radio access network, CRAN) scenario, or the network device may be a relay station, an access point, an in-vehicle device, a wearable device, an access network device (for example, a gNB) in a future 5G network, an access network device in a future evolved PLMN network, or the like. This is not limited in embodiments of this application.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some processing functions at the physical layer, radio frequency processing, and a function related to an active antenna. Information at the RRC layer is eventually converted into information at the PHY layer, or is converted from information at the PHY layer. Therefore, in this architecture, higher layer signaling such as RRC layer signaling may alternatively be considered to be sent by the DU or sent by the DU and the AAU. It may be understood that, the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

For example, the network device may be used as a scheduling device. In this case, the network device may include, for example, but is not limited to: an LTE eNodeB eNB, an NR gNodeB gNB, an operator, and the like. Functions thereof may include, for example, configuring uplink and downlink resources, and sending downlink control information (downlink control information, DCI) in a scheduling mode of the base station. For example, the network device may further serve as a sending device. In this case, the network device may include, for example, but is not limited to: a TRP and an RRH, and functions of the network device may include, for example: sending a downlink signal and receiving an uplink signal.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device, another processing device connected to a wireless modem, an in-vehicle device, a wearable device, a terminal device in a future 5G network, a terminal device in a future evolved public land mobile network (public land mobile network, PLMN), or the like. This is not limited in embodiments of this application. The terminal device in embodiments of this application may be a mobile phone (mobile phone), a tablet computer (pad), a computer with a wireless transceiver function, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the terminal device and a chip that may be disposed in the terminal device are collectively referred to as a terminal device.

Functions of the terminal device may include, for example, but are not limited to: receiving a downlink/sidelink signal, and/or sending an uplink/sidelink signal.

For example, the network device and the terminal device may include an RRC signaling exchange module, a MAC signaling exchange module, and a PHY signaling exchange module. The RRC signaling exchange module may be a module used by the network device and the terminal device to send and receive RRC signaling. The MAC signaling exchange module may be a module used by the network device and the terminal device to send and receive a MAC control element (control element, CE). The PHY signaling and data may be a module used by the network device and the terminal device to send and receive uplink control signaling, downlink control signaling, uplink and downlink data, or downlink data.

In transmission, the communication system usually uses different types of reference signals. One type of reference signal is used for channel estimation, so that coherent demodulation can be performed on a receiving signal including control information or data. Another type of reference signal is used for channel state measurement or channel quality measurement, to implement UE scheduling. The UE may obtain channel state information CSI based on channel quality measurement of a channel state information reference signal (channel state information reference signal, CSI-RS), where the CSI includes at least one of a rank indicator (rank indicator, RI), a precoding matrix indicator (precoding matrix indicator, PMI), a channel quality indicator (channel quality indicator, CQI), and the like. The CSI information may be sent by the user equipment to a base station through a physical uplink control channel or a physical uplink shared channel.

A wireless communication system mentioned in embodiments of this application includes but is not limited to a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long-term evolution (long-term evolution, LTE) system, a long-term evolution advanced (LTE-advanced, LTE-A) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, 5G, a converged system of a plurality of access systems, an evolved system, three main application scenarios of a 5G mobile communication system, namely, enhanced mobile broadband (enhanced mobile broadband, eMBB), ultra-reliable and low-latency communication (ultra-reliable and low-latency communication, URLLC), and enhanced machine-type communication (enhanced machine-type communication, eMTC), or a new communication system that emerges in the future.

It may be understood that, in this application, a transmit end is a device that sends a reference signal and/or data, and a receive end is a device that receives the reference signal and/or data, performs channel measurement, and sends channel information (or feedback information). Correspondingly, the transmit end may further receive the channel information from the receive end. In an example, the transmit end may be a network device, for example, a base station, and the receive end may be a terminal device. Alternatively, in another example, the transmit end may be a terminal device, and the receive end may be a network device, for example, a base station. In addition, according to a requirement, both the transmit end and the receive end may be a terminal device or a network device.

It should be noted that the architecture of the communication system shown in FIG. 1 is not limited to including only the devices shown in the figure, and may further include another device not shown in the figure. Details are not described herein in this application one by one.

With reference to the system shown in FIG. 1, the following describes a method for feeding back a PMI codebook in a multi-user MIMO wireless transmission process. As shown in FIG. 2, a PMI codebook is designed to represent a dominant channel eigenvector of a plurality of subband blocks (subband blocks, SBs) with high resolution. In a matrix form, the subband block corresponds to a channel matrix of $N \times K$ shown in FIG. 2, and is represented as $H_{N,K}$, where $K$ represents a quantity of SBs, and N represents a quantity of dominant channel eigenvectors. A vector in a $K^{th}$ column of $H_{N,K}$ represents a channel eigenvector of a $K^{th}$ SB.

One feedback manner is type II channel state feedback (type II CSI). The manner is based on compressing columns of the channel matrix $H_{N,K}$ in SD by performing a linear combination of basis vectors including the matrix $W_1$ in the spatial domain (spatial domain, SD). Particularly, the channel eigenvector $e$ is represented as a linear combination

$$e \approx \sum_{i=0}^{L-1} c_i b_i$$

of $L$ discrete fourier transform (discrete fourier transform, DFT) vectors, as shown in FIG. 2.

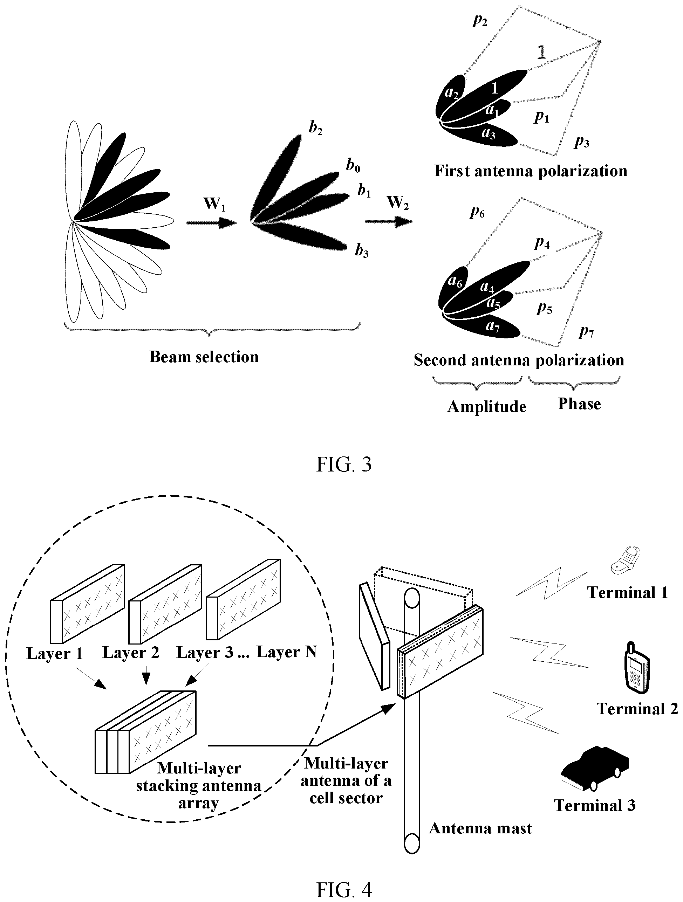

In summary, the type II channel state feedback may include the following steps: First, a specific quantity of beams (not more than 4) are selected from all beam directions. For example, the selected four beams are respectively represented as b0, b1, b2, and b3 in FIG. 3. Second, dual polarization is considered in each beam direction (for example, p2 and p6 in the b2 direction). Finally, a weighting coefficient w describing the channel is a weighted sum of (not exceeding) 8 complex responses, represented by $w = \sum_{i=0}^{7} a_i p_i b_i$. Herein, $b_i$ indicates a beam direction, $p_i$ indicates a polarization component, and $a_i$ indicates a channel complex response of a specific beam in a selected polarization. The complex response includes both an amplitude and a phase.

As an improvement method based on the type II channel state feedback, to compress feedback signaling overheads, a DFT basis vector $W_f$ in frequency domain (frequency domain, FD) may be further used to compress the channel matrix $H_{N,K}$, to obtain a matrix $\tilde{W}_2 = W_1^H H_{N,K} W_f$. $K_0$ largest elements are selected from all elements of the matrix $\tilde{W}_2$, and remaining elements are set to 0. An element with a largest value is selected from the $K_0$ elements, and is set to 1. The remaining $K_0 - 1$ elements are normalized to an equally scaled value based on the element with the largest value. Finally, the normalized $\tilde{W}_2$ is used as the PMI and fed back from the receive end to the transmit end. The transmit end determines, based on the PMI, a precoding matrix in a process of sending user data, and then sends the user data to the receive end.

For the measurement and feedback manners in the foregoing example, all energy of a wanted signal and all degrees of freedom of a spatial channel cannot be fully utilized, and communication performance needs to be further improved. In one aspect, in the foregoing manner, a specific quantity of beams are determined through beam selection (or selection), and zero-forcing (zero-forcing, ZF) processing is performed in an unselected beam direction (for example, b5 or b6, not shown in FIG. 3, and refers to a beam other than b0 to b3). In other words, energy in another direction is discarded. If a difference between energy in another direction and energy in a selected beam direction is not large, or energy in each direction is evenly incident, all energy of a wanted signal and all degrees of freedom of a spatial channel in the foregoing solution are not fully utilized, and a channel capacity loss exists. In another aspect, the measurement and feedback manners in the foregoing example cannot accurately reflect a channel response of an antenna array that is blocked or has a significant scattering effect or coupling effect in a stereoscopic geometric structure. Therefore, the measurement and feedback manners are applicable only to an array deployment solution of a planar geometric structure. For an antenna array not in a planar geometric structure, all energy of a wanted signal and all degrees of freedom of a spatial channel are not fully utilized.

In a beyond 5G (beyond 5G, B5G) era, channel capacity and spectral efficiency of a wireless communication system are further improved, so that a telecom operator can better use limited spectrum resources to provide higher data rates for a user. Researchers are researching new technologies to improve and make breakthroughs in MIMO-OFDM. A multi-layer antenna stacking technology and an intelligent reflector technology are two new technologies with potential.

With a given wireless channel, a degree of freedom of an antenna determines the channel capacity and the spectral efficiency of the wireless communication system. With a given frequency of a radio electromagnetic wave, physical dimensions (length, width, and thickness) of an antenna determine the degree of freedom of the antenna. With a given physical area (length and width) of the antenna, a proper increase in the thickness of the antenna (for example, multi-layer stacking) can significantly increase the degree of freedom of the antenna. This is sometimes referred to as a depth gain. For example, without loss of generality, to further increase the degree of freedom of the antenna, in the diagram of the typical system architecture shown in FIG. 3, each base station includes three sectors, an antenna array of each sector is formed by stacking three layers, and a plurality of antenna elements are evenly distributed on a rectangular plane of antennas at each layer. This is equivalent to increasing the thickness of the antenna array. It can be easily learned that this application may include a plurality of sectors, a plurality of layers of antennas are stacked, and any quantity of antenna elements may be distributed in any shape, evenly, or unevenly at each layer of antennas. Antennas at different layers may have the same or different shapes, distribution, and quantities of elements.

Therefore, it is reasonable to improve the channel measurement and feedback method in the foregoing example, to fully utilize all energy of the wanted signal and all degrees of freedom of the spatial channel.

With reference to the communication system shown in FIG. 1, the following describes a method provided in embodiments of this application. In an example, the wireless system in the present invention includes at least one base station and several terminals. The base station includes an antenna mast and multi-layer antennas of several cell sectors. A multi-layer antenna of each cell sector is formed by several layers of antenna arrays in a form of multi-layer geometric space stacking. A terminal type served by the base station includes but is not limited to an uncrewed aerial vehicle, a smartphone, an intelligent vehicle, and the like. An application scenario of the present invention is preferably a wireless communication scenario of a macro cell of a base station, and may alternatively be extended to an indoor micro cell scenario, and other scenarios such as direct interconnection between vehicles and direct interconnection between uncrewed aerial vehicles. To better reflect a performance advantage of solutions of the present invention, ideally, a greater variety of propagation paths of a spatial channel, a greater variety of directions of departing or arriving at an antenna, and more even distribution of signal energy in different directions indicate better performance.

Optionally, the base station includes a multi-layer antenna array structure, for example, includes the antenna array structure shown in FIG. 4, or may be another structure. This does not fall within the scope of this application.

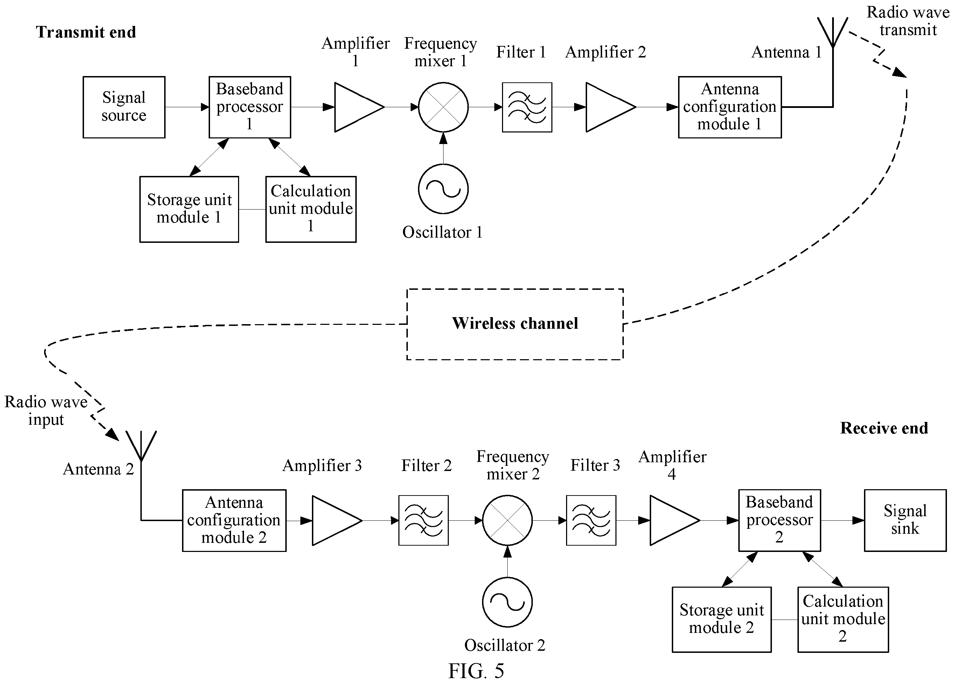

For example, the transmit end and the receive end in this application may have a structure shown in FIG. 5.

As shown in FIG. 5, functional modules in Embodiment 1 of the present invention include three entities: a transmit end, a wireless channel, and a receive end.

The transmit end includes five subsystems: a signal source, a baseband processor, a radio frequency link, an antenna configuration module, and an antenna. The baseband processor includes a storage unit module and a calculation unit module. The radio frequency link includes an amplifier 1, a frequency mixer 1, an oscillator 1, a filter 1, and an amplifier 2.

A wireless channel refers to all propagation environments of a radio electromagnetic wave between a transmit antenna and a receive antenna.

The receive end includes five subsystems: an antenna, an antenna configuration module, a radio frequency link, a baseband processor, and a signal sink. The baseband processor includes a storage unit module and a calculation unit module. The radio frequency link includes an amplifier 3, a filter 2, a frequency mixer 2, an oscillator 2, a filter 3, and an amplifier 4.

Center frequencies of the oscillators at both the transmit end and the receive end are $f_0$, and corresponding wavelengths are $\lambda_0$. The storage unit modules at both the transmit end and the receive end may store some typical Huygens equivalent surfaces (or referred to as a Huygens surface (Huygens surface), a Huygens equivalent surface pattern or pattern, or the like) that are previously known as reference blueprints (or referred to as a Huygens equivalent surface blueprint or a blueprint for short). In addition, the storage unit module may dynamically refresh a locally stored reference blueprint database based on instructions. The calculation unit module is responsible for completing a generation algorithm of the Huygens surface, a generation algorithm of a pattern index, and (optionally) a compression algorithm of the pattern index.

It may be understood that, the antennas at the transmit end and/or the receive end shown in FIG. 5 have the multi-layer array structure shown in FIG. 4 or another structure.

A Huygens principle means that all points of a wave front (wave front) are secondary sources of an external wave.

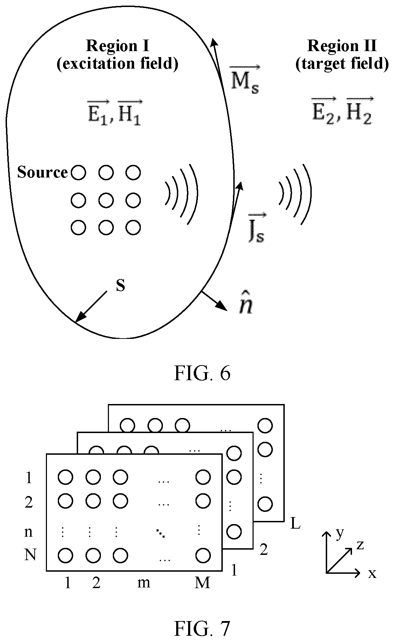

As shown in FIG. 6, any electromagnetic field in two regions is separated by a closed surface S that provides electric and magnetic surface currents. The electromagnetic fields in a region I and a region II are defined independently of each other, and a virtual current element ($\overrightarrow{J_s}$) and a magnetic current element ($\overrightarrow{M_s}$) that meet a boundary condition are found by using a Huygens surface equivalence principle. Effects of an excitation field ($\overrightarrow{E_1}$, $\overrightarrow{H_1}$) in the region I on a target field ($\overrightarrow{E_2}$, $\overrightarrow{H_2}$) in the region II outside the surface S may all be equivalently represented by a surface current ($\overrightarrow{J_s}$, $\overrightarrow{M_s}$) on the closed surface S. Herein, E represents an electric field and, H represents a magnetic field. In the Huygens surface, the following relationship is met:

$$\overrightarrow{J_s} = \hat{n} \times (\overrightarrow{H_2} - \overrightarrow{H_1});$$

$$\overrightarrow{M_s} = -\hat{n} \times (\overrightarrow{E_2} - \overrightarrow{E_1}).$$

ñ represents a normal unit vector that is from the region I to the region II and that is perpendicular to the closed surface S.

It is assumed that either of the transmit antenna and the receive antenna in FIG. 5 is the multi-layer stacking antenna array shown in FIG. 4, or both the two antennas are the multi-layer stacking antenna arrays shown in FIG. 4. Options that may be set by the antenna configuration module include: a spatial position of an activation element in the antenna array, a polarization mode of the element, an amplitude attenuator of the element, a phase shifter of the element, a time delayer of the element, and an excitation current mode of the element.

As shown in Table 1, there are four different combination modes of antenna capabilities. Solutions of the present invention are applicable to all four combinations. Unless otherwise specified, the method in Embodiment 1 is described below based on the most complex combination 4. Other simple combinations may be obtained by simplifying the combination 4. Details are not described again. Optionally, a simple and universal geometric topology of multi-layer stacking antennas is shown in FIG. 7, including L layers, where each layer includes M rows and N columns of element coordinates, and spatial distances between a coordinate of each element and a coordinate of a most adjacent neighboring element are respectively denoted as *dx, dy,* and *dz.* Any antenna element may be denoted as (*m, n, l, p*) to represent an element in an $m^{th}$ row, an $n^{th}$ column, an $l^{th}$ layer, and a $p^{th}$ polarization direction. A value range of the polarization direction is p={1, 2, 3}, and p=1, p=2, and p=3 respectively represent three polarization directions that are perpendicular to each other in three-dimensional space.

**Table 1: Four combination modes of antenna capabilities**

|  | Combination 1 | Combination 2 | Combination 3 | Combination 4 |
|---|---|---|---|---|
| Transmit antenna | Single-layer antenna | Single-layer antenna | Multi-layer antenna | Multi-layer antenna |
| Receive antenna | Single-layer antenna | Multi-layer antenna | Single-layer antenna | Multi-layer antenna |

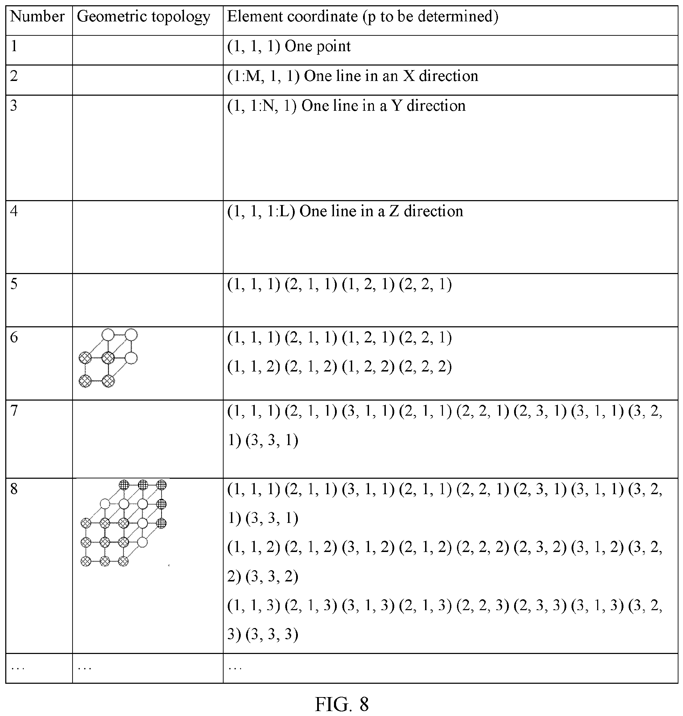

Considering the geometric topology shown in FIG. 7, traversal space in which a switch of the antenna element may be selected (activated/deactivated) is $2^{M \times N \times L \times 3}$. Assuming that M=8, N=8, and L=3, the traversal space is $2^{M \times N \times L \times 3} = 2^{384} > 10^{96}$. Because there is an excessively large quantity of elements in the space, in principle, it is impossible to traverse all one-to-one Huygens surfaces in the entire space through calculation within a limited period of time. Therefore, the reference blueprint database of the storage unit module stores a Huygens surface pattern of a typical geometric topology under typical excitation, as shown in FIG. 8. In FIG. 8, antenna elements with different shadows indicate that the antenna elements are at different antenna layers.

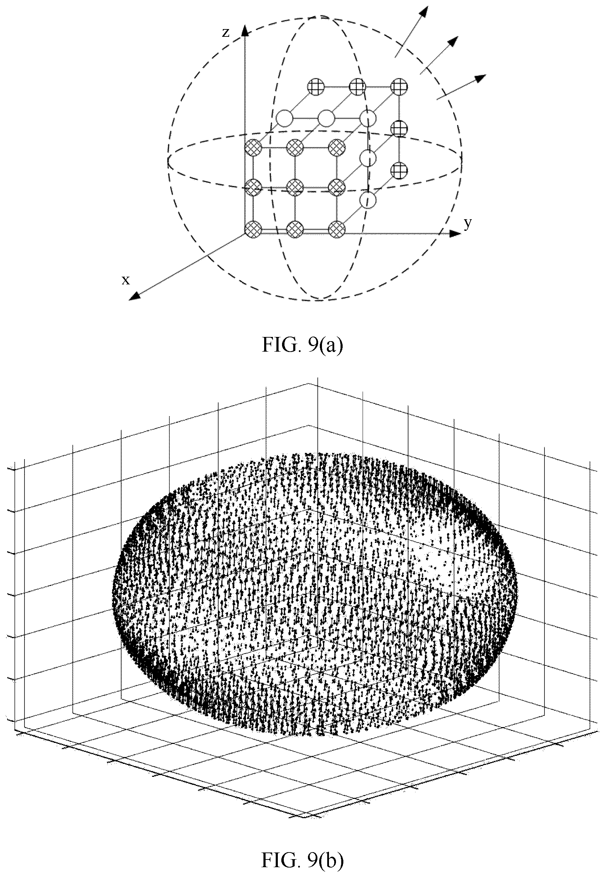

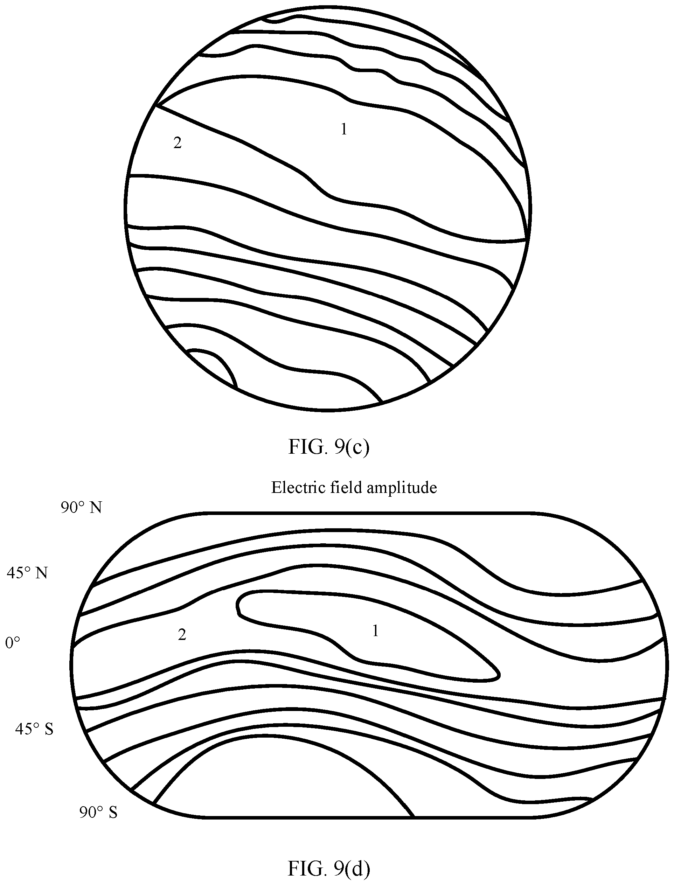

An eighth typical geometric topology in FIG. 8 is used as an example, as shown in FIG. 9(a). A virtual three-dimensional sphere encloses the geometric topology at a periphery of the virtual geometric topology, and an electromagnetic wave is emitted to external space or incident to an antenna through the virtual sphere. Distribution of current elements (Js) in a Huygens surface on the three-dimensional sphere is shown in FIG. 9(b), and a diagram of a Huygens surface on the three-dimensional sphere after normalization processing is performed based on specific quantization precision is shown in FIG. 9(c). Further, according to a Mollweide projection (Mollweide projection) method (also referred to as a world map drawing method), a diagram of a two-dimensional Huygens surface expanded from the three-dimensional sphere is shown in FIG. 9(d). It may be understood that, in the diagram of the Huygens surface shown in FIG. 9(c) or FIG. 9(d), a region enclosed by a curve represents pixel coordinate positions with a same or similar value. For example, coordinates in different regions correspond to different value ranges. It may be further understood that, a region shown in FIG. 9(c) is in one-to-one correspondence with a region shown in FIG. 9(d). For example, a region 1 shown in FIG. 9(c) corresponds to a region 1 shown in FIG. 9(d), and a region 2 shown in FIG. 9(c) corresponds to a region 2 shown in FIG.

9(d). It may be understood that, for a diagram of a Huygens surface shown in another accompanying drawing in this application, refer to the descriptions herein.

A pixel coordinate of the Huygens pattern may be represented by latitude and longitude. For example, the latitude and longitude may be represented as N, S, W, and E, corresponding to north latitude, south latitude, west longitude, and east longitude, respectively. The Mollweide projection method can be used to convert a coordinate (x, y, z) on a surface into a coordinate (longitude, latitude, and height) according to a specific rule. A globe and a world map are typical applications of this method. According to the method, reversible and equivalent graphic conversion of a Huygens surface can be realized between 3D and 2D.

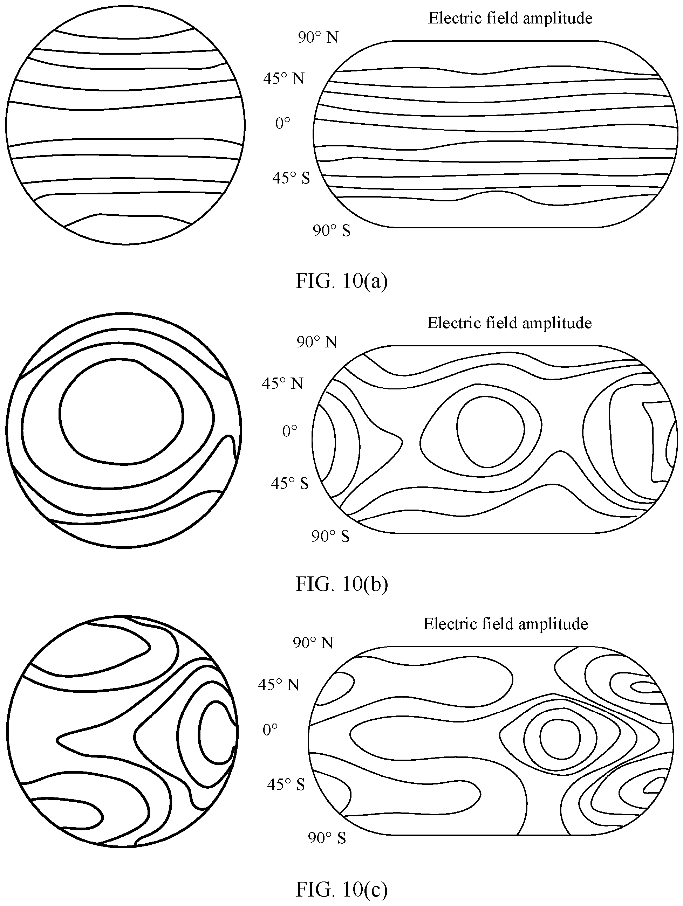

A pattern blueprint of a Huygens surface of a typical geometric topology and in a polarization configuration is shown in FIG. 10(a) and FIG. 10(b). FIG. 10(a) is a diagram of a three-dimensional Huygens equivalent surface and a two-dimensional Huygens equivalent surface that correspond to a straight line in an oz direction. For the oz direction, refer to a coordinate system in FIG. 9(a). FIG. 10(b) is a diagram of a three-dimensional Huygens equivalent surface and a two-dimensional Huygens equivalent surface that correspond to a single-layer array antenna structure parallel to an ozy plane. In an actual system, the storage unit modules of both the transmit end and the receive end record and update blueprint databases of the transmit end and the receive end. In addition, FIG. 10(c) is a diagram of a three-dimensional Huygens equivalent surface and a two-dimensional Huygens equivalent surface, for example, Huygens equivalent surfaces determined by a receive end. For example, the diagram of the Huygens equivalent surface shown in FIG. 10(c) is a linear stacking of the diagram of the Huygens equivalent surface shown in FIG. 10(a) and the diagram of the Huygens equivalent surface shown in FIG. 10(b). In this case, an antenna array structure used by the transmit end when an actual measurement result is the diagram of the Huygens equivalent surface shown in FIG. 10(c) may be determined based on the antenna array structures respectively corresponding to FIG. 10(a) and FIG. 10(b).

The following describes, with reference to the accompanying drawings, a communication method applying a Huygens equivalent surface according to an embodiment of this application. In the method provided in this application, because a transmitting process and a receiving process of any antenna are reversible, roles of a transmit end and a receive end may be exchanged. For example, in an uplink communication link, a terminal device may be used as a transmit end, and a network device (for example, a base station) or a multi-layer antenna of a network device is used as a receive end. It may be understood that, in some scenarios, the network device, for example, a base station may be used as a transmit end, and the terminal device may be used as a receive end. For example, in a downlink communication link, a network device may be used as a transmit end, and a terminal device or a multi-layer antenna of a terminal device is used as a receive end. For the network device and the terminal device, refer to the descriptions in FIG. 1.

In summary, in the communication method applying a Huygens equivalent surface provided in this application, the transmit end may be configured to send a reference signal or data (for example, 0/1 bit data), so that the receive end obtains, based on the reference signal and by using an estimation algorithm, a Huygens equivalent surface of an incident electromagnetic wave during receiving. In addition, the receive end may alternatively receive data (for example, 0/1 bit data) and obtain a Huygens equivalent surface of an incident electromagnetic wave by using a blind signal detection algorithm. The receive end may further determine at least one Huygens equivalent surface based on a similarity between the Huygens equivalent surface of the incident electromagnetic wave and a known Huygens equivalent surface. Feedback information sent by the receive end may be referred to as first indication information, and the first indication information may include indication information of at least one Huygens equivalent surface, that is, the feedback information of the receive end indicates the at least one Huygens equivalent surface. The transmit end may deduce, based on the received indication information of the at least one Huygens equivalent surface, a relationship between a Huygens equivalent surface corresponding to a first receiving signal of the receive end and at least one known Huygens equivalent surface, and then determine, based on a configuration parameter corresponding to the at least one known Huygens equivalent surface, a transmit end configuration parameter used for subsequently sending a signal or data, to implement a configuration based on channel measurement and feedback.

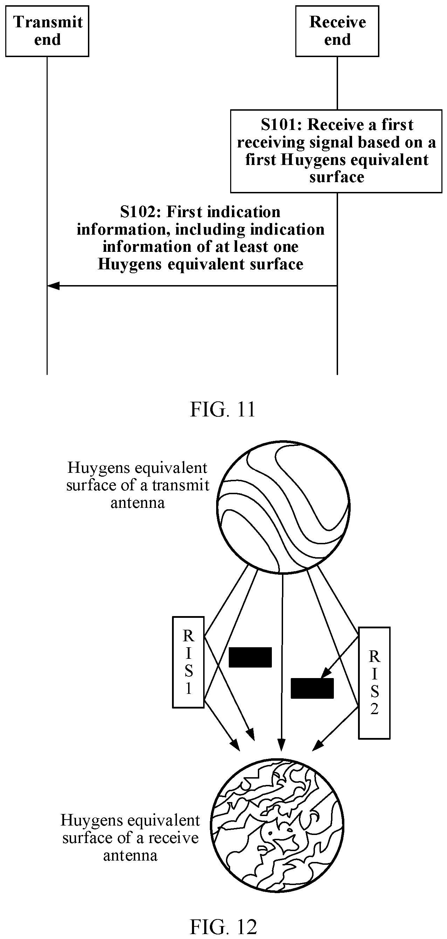

As shown in FIG. 11, the method may include steps shown in S101 and S102.

S101: A receive end receives a first receiving signal based on a first Huygens equivalent surface.

Refer to the foregoing descriptions. The first receiving signal in this application may include a reference signal, data, and/or the like. This is not specifically required.

In this application, the Huygens equivalent surface is an electric field vector and/or a magnetic field vector of a closed surface in three-dimensional space in which a receive antenna is located.

Specifically, in S101, the receive end may receive the first receiving signal based on the first Huygens equivalent surface.

Optionally, the first Huygens equivalent surface may be indicated by the transmit end, or may be determined by the transmit end and the receive end through negotiation, or may be determined by the receive end in a manner of pre-configuration, protocol definition, or predefinition.

For example, the receive end and the transmit end may agree, through negotiation, that the receive end receives the first receiving signal based on the first Huygens equivalent surface. Alternatively, the receive end may determine, in the manner of pre-configuration or protocol definition, to receive the first receiving signal based on the first Huygens equivalent surface. For example, if determining is performed through negotiation, the receive end may receive indication information (which may be referred to as second indication information in this application) from the transmit end. The indication information may indicate the receive end to receive the first receiving signal based on the first Huygens equivalent surface, or the indication information may indicate the first Huygens equivalent surface. Specifically, the indication information may indicate that the first Huygens equivalent surface is an electric field vector, a magnetic field vector, or an electric field vector and a magnetic field vector, of the closed surface in three-dimensional space in which the receive antenna at the receive end is located.

Herein, S101 is described by using a scenario in which the first receiving signal is determined based on a reference signal sent by the transmit end as an example. The reference signal may be a channel sounding reference signal (sounding reference signal, SRS), a pilot (pilot) signal, or the like. This is not specifically required.

Optionally, the second indication information may indicate an antenna configuration at the receive end, and the receive end may configure the receive antenna based on the antenna configuration, to form the first Huygens equivalent surface.

In addition, the second indication information may further indicate information about the reference signal. For example, in a scenario in which the first receiving signal is determined based on the reference signal sent by the transmit end, the second indication information may further indicate information such as a type of the reference signal and/or a time-frequency resource, and the receive end may receive the reference signal based on the information such as the type of the reference signal and/or the time-frequency resource, to obtain the first receiving signal. It may be understood that, the information such as the type of the reference signal and/or the time-frequency resource may alternatively be pre-configured or defined in a protocol. This is not specifically required in this application. Alternatively, other indication information may indicate the information such as the type of the reference signal and/or the time-frequency resource.

In an example, a transmit antenna may be configured at the transmit end shown in FIG. 5, so that an activation element of the transmit antenna is set to include a specific geometric topology basic unit. Specifically, the antenna configuration module (the antenna configuration module 1 shown in FIG. 5) sequentially sets the antennas as geometric topology basic units. An element on a selected element coordinate is activated, and another unselected element is in a silent state. The transmit end combines an element coordinate and a polarization mode that are set by a local antenna, and denotes the combination as an excitation configuration (F). It may be understood that, a combination of a geometric topology and a polarization mode of each antenna element at the transmit end may correspond to one excitation configuration (F).

In another example, the receive end shown in FIG. 5 may configure a receive antenna based on the second indication information or according to a local default policy, so that an activation element of the receive antenna is set to include a specific geometric topology basic unit. Specifically, the antenna configuration module (the antenna configuration module 2 shown in FIG. 5) sequentially sets the antennas as geometric topology basic units. An element on a selected element coordinate is activated, and another unselected element is in a silent state. It may be understood that, a combination of a geometric topology and a polarization mode of each antenna element at the receive end may correspond to one receiving configuration (W). According to the local default policy, the receive end may set a local antenna to an all-element activation mode based on a default receiving configuration, and listen to a sounding signal from the transmit end with a maximum receiving capability. If any receiving configuration of the receive antenna at the receive end is used as a transmit configuration of the transmit antenna, and the receiving configuration is used to transmit a radio electromagnetic wave, an electric field vector and/or a magnetic field vector formed by the electromagnetic wave in space near the receive end is referred to as the first Huygens equivalent surface. It may be understood that, because the first Huygens equivalent surface may be obtained through mathematical calculation in advance and then stored, a transmission process of the electromagnetic wave does not necessarily require a physical process. When the procedure of this application is performed, the stored first Huygens equivalent surface may be read.

Then, the transmit end sequentially sends, based on a specific geometric topology and in different time windows in polarization modes of p=1, p=2, and p=3, a predetermined sounding (pilot) signal to the receive end. An $s^{th}$ sounding signal is denoted as $P_s$, and a maximum of S different types of sounding signals are allowed. A radio electromagnetic wave signal carrying the $s^{th}$ sounding signal is incident to the receive antenna at the receive end, and then passes through the amplifier 3, the filter 2, the frequency mixer 2, the filter 3, and the amplifier 4 shown in FIG. 5 in sequence. The receive end records a receiving signal or a signal sequence that is input from the amplifier 4 to the baseband processor 2 at one or more instantaneous moments, and is denoted as $R_s$. That is, $R_s$ corresponds to the first receiving signal. An electric field vector and/or a magnetic field vector formed by a radio electromagnetic wave signal from a transmit end in space near a receive end is referred to as a second Huygens equivalent surface.

Optionally, both the first Huygens equivalent surface and the second Huygens equivalent surface are the electric field vectors of the closed surface in three-dimensional space in which the receive antenna is located, or both the first Huygens equivalent surface and the second Huygens equivalent surface are the magnetic field vectors of the closed surface in three-dimensional space in which the receive antenna is located, or both the first Huygens equivalent surface and the second Huygens equivalent surface are the electric field vectors and the magnetic field vectors of the closed surface in three-dimensional space in which the receive antenna is located.

In this application, the second Huygens equivalent surface may be used for channel measurement and feedback in this application. It may be understood that, the second Huygens equivalent surface may be electromagnetic field distribution of the closed surface in three-dimensional space near the receive antenna when the receive end receives the first receiving signal by using the first Huygens equivalent surface. The "closed surface" herein is specifically an air interface that wraps a physical antenna and is 1 to 10 carrier wavelength ranges near the physical antenna. Optionally, a geometric topological center point of the physical antenna at the receive end is used as a center of the closed surface. A shape of the closed surface may be any closed surface, including but not limited to a spherical surface, a cube surface, a cuboid surface, or the like. The "electromagnetic field distribution" herein specifically refers to an electric field vector, a magnetic field vector, or an electric field vector and a magnetic field vector that are projected by an electromagnetic wave on an air interface.

The following describes a manner in which the receive end determines the second Huygens equivalent surface based on the first receiving signal.

The receive end may use the first receiving signal as a transmit signal, and obtain, by using an electromagnetic algorithm, a Huygens surface formed by the transmit signal in space near the receive antenna, which is referred to as a Huygens equivalent surface corresponding to the first receiving signal. The Huygens equivalent surface is a three-dimensional Huygens equivalent surface. For example, a finite element method (finite element method, FEM) is a feasible algorithm for determining a Huygens surface based on a transmit signal.

FIG. 5 is still used as an example. In a process of determining the second Huygens equivalent surface, a calculation unit module 2 of the receive end may use the receiving signal $R_s$ as a transmit signal $T_s$, and locally obtain, by using a calculation electromagnetic algorithm (for example, the finite element method), a Huygens equivalent surface formed in nearby space by the transmit signal $T_s$ in an all-element activation mode of the receive antenna, where the Huygens equivalent surface is denoted as Hyg3D.

It may be understood that, the second Huygens equivalent surface may be the Huygens equivalent surface corresponding to the first receiving signal, or may be a Huygens equivalent surface obtained by further processing on the Huygens equivalent surface corresponding to the first receiving signal.

Optionally, the first Huygens equivalent surface and the second Huygens equivalent surface are in a same type of electromagnetic field distribution. To be specific, for example, the first Huygens equivalent surface and the second Huygens equivalent surface are electric field vectors of the closed surface in three-dimensional space in which the receive antenna at the receive end is located. Alternatively, the first Huygens equivalent surface and the second Huygens equivalent surface are magnetic field vectors of the closed surface in three-dimensional space in which the receive antenna at the receive end is located. Alternatively, the first Huygens equivalent surface and the second Huygens equivalent surface are the electric field vector and the magnetic field vector of the closed surface in three-dimensional space in which the receive antenna at the receive end is located.

Optionally, further processing on the Huygens equivalent surface corresponding to the first receiving signal may include compressing the Huygens equivalent surface, to reduce data processing overheads.

In this application, a manner of compressing the Huygens equivalent surface includes but is not limited to: projecting a three-dimensional Huygens equivalent surface to two-dimensional space, to obtain a two-dimensional Huygens equivalent surface. For example, the receive end may project the three-dimensional Huygens equivalent surface to two-dimensional space by using a Mollweide projection (Mollweide projection) method (which may also be referred to as a world map drawing method), to obtain the two-dimensional Huygens equivalent surface. Still as shown in FIG. 9, the three-dimensional Huygens equivalent surface is an image shown in FIG. 9(c), and the two-dimensional Huygens equivalent surface obtained through Mollweide projection is an image shown in FIG. 9(d).

FIG. 5 is still used as an example. The calculation unit module 2 of the receive end may expand the Huygens equivalent surface Hyg3D from a three-dimensional surface into a two-dimensional Huygens surface through Mollweide projection, where the two-dimensional Huygens surface is denoted as Hyg2D.

In addition, optionally, a manner of compressing the Huygens equivalent surface includes but is not limited to: adjusting a three-dimensional Huygens equivalent surface and/or a size of an angle granularity of a three-dimensional Huygens equivalent surface, to reduce data volume or increase resolution. In this application, a size of a solid angular (solid angular, SA) granularity of a Huygens equivalent surface may represent resolution (or precision) of the Huygens equivalent surface. The solid angular granularity may represent a size of a solid angular particle (or unit) of an incident angle (or an emergent angle) of an electromagnetic wave to an antenna. The solid angle may be understood as a spatial range in which a geometric topological center point of a receive (or transmit) antenna array diverges outwards, and is represented by a combination of a horizontal angle and a vertical angle. A larger solid angular granularity indicates lower resolution of the Huygens equivalent surface and a higher data volume compression rate. For example, a sphere of a regular sphere with radius of 1 (no unit is required) is divided into eight regions, and each region is a solid angular granularity. In this case, the horizontal angle of the solid angular granularity is 90° (degree) and the vertical angle is 90°. If the sphere is divided into 64 regions, the horizontal angle of the solid angular granularity is 45° and the vertical angle is 45°. It may be understood that, the solid angular granularity of the Huygens equivalent surface that is divided into eight regions is greater than the solid angular granularity of the Huygens equivalent surface that is divided into 64 regions, but resolution of the Huygens equivalent surface that is divided into eight regions is lower than that of the Huygens equivalent surface that is divided into 64 regions, or a compression rate of the Huygens equivalent surface that is divided into 64 regions is less than a compression rate of the Huygens equivalent surface that is divided into eight regions. It may be understood that, in the diagram of the Huygens equivalent surface shown in FIG. 9(c), FIG. 9(d), FIG. 10(a), FIG. 10(b), or FIG. 10(c), the solid angular particle is a minimum unit for determining a value (for example, an electric field amplitude).

The receive end may obtain the second Huygens equivalent surface based on a first compression rate. For example, a value of the first compression rate is greater than 0 and less than or equal to 1. A representation policy of the first compression rate is to specify a quantity of solid angular particles included in a Huygens equivalent surface in a given size. A larger quantity indicates a smaller solid angular granularity and higher resolution of the Huygens equivalent surface. It may be understood that, higher resolution of a Huygens surface indicates higher resolution of a solid angle of a wireless channel and higher precision of a channel measurement result obtained based on the Huygens equivalent surface. The first compression rate may be understood as being related to a size of the solid angular granularity. For example, the first compression rate is inversely proportional to the solid angular granularity.

In addition, the first compression rate may alternatively be understood as a compression rate of data volume. For example, when the data volume of the Huygens equivalent surface corresponding to the first receiving signal is large, the data volume is compressed based on the first compression rate, and a compression manner may be increasing the size of the solid angular granularity. For example, when $\eta = 1$, it indicates that the Huygens equivalent surface is not compressed; or when $\eta = 1/2$, it indicates that data volume of the compressed Huygens equivalent surface is 1/2 of original data volume, or in other words, two original solid angular particles are combined into one solid angular particle of the compressed Huygens equivalent surface. It may be understood that, the data refers to a size and direction information of an electric field vector and/or a magnetic field vector.

As shown in FIG. 5, during compression, the calculation unit module 2 may compress the two-dimensional Huygens equivalent surface Hyg2D into a two-dimensional Huygens equivalent surface with specified resolution based on the first compression rate, where the compressed Huygens equivalent surface is denoted as Hyg2D-Compress. The first compression rate is denoted as $\eta \in [0,1]$, and therefore the Huygens equivalent surface Hyg2D-Compress may alternatively be denoted as Hyg2D($\eta$). It may be understood that, $\eta = 0$ may indicate that the data volume is 0. In addition, $\eta = 1$ may indicate that the data volume is not compressed.

Optionally, to further reduce data processing overheads, a dynamic compression method may be used when the Huygens equivalent surface is compressed.

In an example of dynamic compression, the receive end may perform high-resolution compression on data in a specific region (referred to as a region of interest) of the Huygens equivalent surface, for example, perform compression based on the first compression rate, and perform low-resolution compression on data in another region. For example, a compression rate of the another region is greater than the first compression rate. For example, the region of interest may be represented by using a solid angle range $\Theta = ([\theta_1, \theta_2], [\varphi_1, \varphi_2]) \subseteq ([0,2\pi], [0, \pi])$, and a solid angle of another region does not belong to the solid angle range $\Theta$. Optionally, to further reduce a data stream, the receive end may set the data in another region other than the region of interest to 0. For example, the solid angle range $\Theta$ is determined by using a geometric topological center point of the receive antenna array as an origin (0, 0, 0) of a local coordinate system and using a globally unified directivity $(\theta, \varphi)$ of three-dimensional space that is agreed upon by the transmit end and the receive end in advance as a reference. The globally unified directivity $(\theta, \varphi)$ is a reference direction determined by negotiation between the transmit end and the receive end, indicated by the transmit end, indicated by the receive end, pre-configured, predefined, or defined in a protocol.

In another example of dynamic compression, the receive end may perform high-resolution compression on data of a Huygens equivalent surface obtained at a specific moment or an instantaneous moment (which may be referred to as a moment of interest), and perform low-resolution compression on data of a Huygens equivalent surface obtained at another moment. That is, resolution of the Huygens equivalent surface at the another moment is low.

Therefore, the receive end may use higher resolution for the region of interest of the Huygens equivalent surface, and use lower resolution for the region of no interest, or set the data to 0; and/or the receive end may use higher resolution for the Huygens equivalent surface obtained at the moment of interest, and use lower resolution for the Huygens equivalent surface obtained at the moment of no interest, or set the data to 0. It may be understood that, the region of interest of the Huygens equivalent surface at the moment of interest may use higher resolution, and another region may use lower resolution, or the data is set to 0.

Optionally, the receive end and the transmit end may determine, through negotiation, at least one of the first compression rate, the solid angle range, or the moment of interest. For example, before S101, the receive end and the transmit end may send, to each other, information that indicates at least one of the first compression rate, the solid angle range, or the moment of interest.

In a possible implementation, the second indication information may indicate at least one of the first compression rate, the solid angle range, or the moment of interest. For example, the second indication information may indicate the first compression rate corresponding to the first Huygens equivalent surface, and the receive end may obtain the second Huygens equivalent surface based on the first compression rate. Alternatively, the transmit end may indicate, to the receive end by using other signaling, at least one of the first compression rate, the solid angle range, or the moment of interest.

In another possible implementation, the first indication information may include at least one of the first compression rate, the solid angle range, or the moment of interest. Alternatively, the receive end may indicate, to the transmit end by using other signaling, at least one of the first compression rate, the solid angle range, or the moment of interest.

In addition, at least one of the first compression rate, the solid angle range, or the moment of interest may alternatively be determined by the transmit end and/or the receive end in a manner of predefinition, pre-configuration, or protocol definition.

It may be understood that, if the receive end and the transmit end do not determine the solid angle range or the moment of interest in a manner such as negotiation, predefinition, pre-configuration, or protocol definition, the full solid angle range may be used, that is, $\Theta = ([0,2\pi], [0, \pi])$.

In this case, a same compression rate, for example, the first compression rate, is used in the full solid angle range of the Huygens equivalent surface determined by the receive end, to improve channel measurement precision.

In addition, if the transmit end and the receive end perform auxiliary communication by using a reconfigurable smart surface (reconfigurable intelligent surface, RIS), the network device may determine a solid angle range of the receive end based on a relative orientation between the RIS and the receive end. For example, the solid angle range is consistent with a position relationship between the RIS and the receive end, so that measurement precision of the RIS relative to the receive end can be improved, to improve communication performance.

S102: The receive end sends the first indication information to the transmit end. The first indication information includes indication information of at least one Huygens equivalent surface. The indication information of the at least one Huygens equivalent surface is determined based on a second Huygens equivalent surface, and the second Huygens equivalent surface corresponds to the first receiving signal.

Correspondingly, the transmit end receives the first indication information. The transmit end may determine, based on the first indication information, a transmit end configuration parameter used for subsequently sending a signal or data.

The following describes content of the first indication information and a manner in which the receive end determines the first indication information.

The receive end may determine the indication information of the at least one Huygens equivalent surface based on the second Huygens equivalent surface. The indication information of the at least one Huygens equivalent surface may include an index of the Huygens equivalent surface and at least one of the following parameters corresponding to the index: a cross correlation coefficient (for example, a normalized cross correlation coefficient) between the Huygens equivalent surface and the second Huygens equivalent surface, a compression rate, and a solid angle range.

For example, the receive end may determine, one by one, a normalized cross correlation (normalized cross correlation, NCC) coefficient between a locally stored Huygens equivalent surface of a typical geometric topology in a typical excitation configuration (referred to as a Huygens equivalent surface blueprint for short) and the second Huygens equivalent surface, and use first $R$ Huygens equivalent surface blueprints with a highest normalized cross correlation coefficient as the at least one Huygens equivalent surface in S102, where $R$ is a positive integer. Optionally, the receive end may store the Huygens reference blueprint database that includes Huygens equivalent surface blueprint information shown in FIG. 8, where the Huygens equivalent surface blueprint information includes an index of the Huygens equivalent surface blueprint. It may be understood that, in this application, the indication information of the Huygens equivalent surface may include the index of the Huygens equivalent surface blueprint. In addition, it may be further understood that, for the receive end, a correspondence between a Huygens equivalent surface blueprint and a typical geometric topology or a typical excitation configuration does not need to be learned. The receive end only needs to store the Huygens equivalent surface blueprint and the index of the Huygens equivalent surface blueprint, and does not need to learn of a geometric topology or an excitation configuration of a specific element or specific elements corresponding to a specific Huygens equivalent surface blueprint. As described above, the excitation configuration is a combination of a geometric topology and a polarization mode of an antenna element.

Herein, a manner of determining a normalized cross correlation coefficient is described. For example, the second Huygens equivalent surface with a compression rate of $\eta$ is Hyg2D($\eta$). The calculation unit module 2 of the receive end obtains K Huygens equivalent surface blueprints one by one from the storage unit module 2, where a $k^{th}$ Huygens equivalent surface blueprint is denoted as Hyg(k), k and K are positive integers, and $1 \le k \le K$. For example, Hyg(k) is any one of the geometric graphs in FIG. 8.

A normalized cross correlation coefficient between Hyg(k) and Hyg2D($\eta$) is denoted as $\rho(k,\eta)$, and satisfies the

following formula:

$$\rho(k,\eta) = \frac{\sum_i \left(Hyg(k)_i - \overline{Hyg(k)}\right)\left(Hyg2D(\eta)_i - \overline{Hyg2D(\eta)}\right)}{\sqrt{\sum_i \left(Hyg(k)_i - \overline{Hyg(k)}\right)^2 \sum_i \left(Hyg2D(\eta)_i - \overline{Hyg2D(\eta)}\right)^2}}$$

$X_i$ represents a projection value of an $i^{th}$ element vector of a Huygens equivalent surface X in an oz direction, and $\overline{X}$ represents an average value of projection values of all element vectors of the Huygens equivalent surface X in the oz direction. The Huygens equivalent surface X is Hyg(k) and Hyg2D($\eta$). Data of the Huygens equivalent surface refers to a size and direction information of an electric field vector and/or a magnetic field vector. It can be easily learned that, NCC value ranges of Hyg(k) and Hyg2D($\eta$) are $-1 \leq \rho \leq 1$. When two Huygens equivalent surfaces are completely the same, a value of the NCC coefficient is 1; when the two Huygens equivalent surfaces are completely opposite, a value of the NCC coefficient is -1; or when the two Huygens equivalent surfaces are completely unrelated, a value of the NCC coefficient is 0.

It may be understood that, a person skilled in the art may appropriately change the foregoing formula or a concept embodied in the foregoing formula, to obtain another similar manner of determining the normalized cross correlation coefficient. Details are not described herein again.

Alternatively, other deformation methods for calculating the correlation coefficient further include but are not limited to:

$$\rho(k,\eta) = \sqrt{\sum_i (Hyg(k)_i - Hyg2D(\eta)_i)^2};$$

or

$$\rho(k,\eta) = \frac{\sum_i (Hyg(k)_i \times Hyg2D(\eta)_i)}{\sqrt{\sum_i (Hyg(k)_i)^2} \times \sqrt{\sum_i (Hyg2D(\eta)_i)^2}}.$$

The receive end may select, from a group $\rho(k, \eta)$, first $R$ NCCs with absolute values that are closest to 1, that is, $1 \geq |\rho_1| \geq |\rho_2| \geq \cdots \geq |\rho_R|$, and use corresponding $R$ Huygens equivalent surface blueprints as the at least one Huygens equivalent surface in S102.

For example, the receive end may obtain an index code of a Huygens surface shown in Table 2. Table 2 is an example of possible indication information of the Huygens equivalent surface. For example, when the full solid angle range is used, the first indication information is a matrix $W$ including content shown in Table 2, and four columns of elements of the matrix $W$ are values of four columns of content in Table 2.

**Table 2: Example of indication information of Huygens surface**

| Sequence r | Blueprint index k | Compression rate $\eta$ | Normalized cross correlation coefficient $\rho(k,\eta)$ |
|---|---|---|---|
| 1 | $k_1$ | $\eta_1$ | $\rho_1$ |
| 2 | $k_2$ | $\eta_2$ | $\rho_2$ |
| … | … | … | … |
| R | $k_R$ | $\eta_R$ | $\rho_R$ |

Optionally, the sequence r in Table 2 is a sequence number obtained after sorting the $R$ Huygens equivalent surface blueprints in a manner of decreasing absolute values of the normalized cross correlation coefficient $\rho(k, \eta)$. The sequence r is optional content in the first indication information, and it may be considered by default that an absolute value of a normalized cross correlation coefficient of a Huygens equivalent surface blueprint with a number ranked in the front is larger. The blueprint index $k$ may represent an index of the Huygens equivalent surface blueprint in the Huygens reference blueprint database shown in FIG. 8. Therefore, the blueprint index is the index of the Huygens equivalent surface. $\eta_1, \eta_2, ...,$ and $\eta_R$ respectively represent compression rates of the $R$ Huygens equivalent surface blueprints. For example, $\eta_1, \eta_2, ...,$ and $\eta_R$ may be the same as or similar to the first compression rate of the second Huygens equivalent surface.

It may be understood that, elements in one row in Table 2 correspond to each other.

For another example, when the solid angle range is considered, that is, the solid angle range is not the full solid angle range, the first indication information may be shown in Table 3. For example, the first indication information is a matrix $W$ including content shown in Table 3, and five columns of elements in the matrix $W$ are values of content in the five columns

in Table 2. $\Theta_1$, $\Theta_2$, ..., and the like in Table 3 each corresponds to one solid angle range. It may be understood that, at least one solid angle range may exist in Table 3. According to the descriptions in this application, the solid angle range may be determined based on a position of the RIS, to improve communication performance in an RIS scenario.

**Table 3: Example of indication information of Huygens surface**

| Solid angle range $\Theta$ | Sequence r | Blueprint index k | Compression rate $\eta$ | Normalized cross correlation coefficient $\rho(k, \eta)$ |
|---|---|---|---|---|
| $\Theta_1$ | 1 | $k_1$ | $\eta_1$ | $\rho_1$ |
| | 2 | $k_2$ | $\eta_2$ | $\rho_2$ |
| | … | … | … | … |
| | R | $k_R$ | $\eta_R$ | $\rho_R$ |
| $\Theta_2$ | 1 | $k_1'$ | $\eta_1'$ | $\rho_1'$ |
| | 2 | $k_2'$ | $\eta_2'$ | $\rho_2'$ |
| | … | … | … | … |
| | R | $k_R'$ | $\eta_R'$ | $\rho_R'$ |
| … | … | … | … | … |

For the sequence r, the blueprint index $k$, the compression rate $\eta$, and the normalized cross correlation coefficient $\rho(k, \eta)$, refer to the descriptions in Table 2. It may be understood that, $k_1$, $k_2$, ..., and $k_R$, or $k_1'$, $k_2'$, ..., and $k_R'$ indicate the indexes of the Huygens equivalent surface blueprint in the Huygens reference blueprint database shown in FIG. 8. Blueprint indexes of some or all of $k_1$, $k_2$, ..., and $k_R$ may be the same as or different from blueprint indexes of some or all of $k_1'$, $k_2'$, ..., and $k_R'$. Compression rates of some or all of $\eta_1$, $\eta_2$, ..., and $\eta_R$ may be the same as or different from compression rates of some or all of $\eta_1'$, $\eta_2'$, ..., and $\eta_R'$.

Optionally, in Table 3, by default, in the Huygens equivalent surface blueprints corresponding to a same solid angle range, an absolute value of a normalized cross correlation coefficient of a Huygens equivalent surface blueprint with a number ranked in the front is larger. For example, $\rho_1$, $\rho_2$, ..., and $\rho_R$ are sorted in descending order, and $\rho_1'$, $\rho_2'$, ..., and $\rho_R'$ are sorted in descending order.

As shown in Table 2 or Table 3, when feedback resources corresponding to the first indication information is limited, the receive end may only feed back information of $R$ Huygens equivalent surface blueprints to the transmit end, so that the transmit end can determine a transmit configuration or parameter based on information of $R$ Huygens equivalent surface blueprints with large absolute values of the normalized cross correlation coefficients, to improve transmission performance.

It may be understood that, the first indication information may alternatively include only the blueprint index, to reduce feedback overheads. For example, by default, the receive end may feed back only a blueprint index with a normalized cross correlation coefficient meeting a specific condition. For example, a normalized cross correlation coefficient of the blueprint index fed back by the receive end is not less than 0.95 or not greater than -0.95. Correspondingly, the receive end uses 0.95 or -0.95 as the normalized cross correlation coefficient corresponding to the received blueprint index. Alternatively, the first indication information may include only the blueprint index and the normalized cross correlation coefficient. If the first indication information includes only the blueprint index or includes only the blueprint index and the normalized cross correlation coefficient, the compression rate and/or the solid angle range may use a default value, or may be exchanged by the receive end and the transmit end by using other signaling, or may be determined by the receive end and the transmit end in a manner of pre-configuration, predefinition, protocol definition, or the like. If the first indication information includes a plurality of blueprint indexes, the plurality of blueprint indexes may be sorted by default. For example, refer to the descriptions in Table 2 or Table 3. Sorting in ascending order may correspond to sorting in descending order of the absolute values of the normalized cross correlation coefficients.

The following describes a manner in which the transmit end determines, based on the first indication information, a configuration parameter (or referred to as an antenna excitation scheme) used to send a signal or data.

According to the foregoing descriptions, the first indication information may include at least one of an index of a Huygens equivalent surface, a normalized cross correlation coefficient, a compression rate, and a solid angle range. For example, if the first indication information includes content shown in Table 2 or Table 3, correspondingly, the transmit end may find, through offline table lookup or real-time calculation, an antenna excitation scheme corresponding to the first indication information, to subsequently send the signal or the data.

The transmit end forms a group of configuration records by using a matrix $W$ of the first indication information fed back by the receive end each time and a transmit antenna excitation configuration (F) used when an $s^{th}$ sounding signal is transmitted, and records the group of configuration records as $\langle F, W \rangle_s$, where $s \in [1, S]$, and stores the configuration records in the local storage unit module 1 of the transmit end shown in FIG. 5. After receiving the first indication information, the transmit end may find (or determine), through offline table lookup or real-time calculation, the antenna excitation scheme corresponding to the first indication information based on the configuration records, to subsequently send the signal or the data.

For example, the first indication information may include a blueprint index, and the transmit end may determine a Huygens equivalent surface blueprint based on the blueprint index, and determine an antenna excitation scheme based on information such as an antenna element topology and a polarization mode that correspond to the Huygens equivalent surface blueprint. For example, the first indication information includes content shown in Table 2. The transmit end may search, based on $k_1$, $k_2$, ..., and $k_R$ a blueprint database to obtain an excitation configuration corresponding to a corresponding Huygens equivalent surface blueprint.

For example, a multi-layer antenna array of L layers, M rows, and N columns includes a total of $J = L \times M \times N$ elements. An excitation configuration of a Huygens equivalent surface blueprint with a blueprint index of $k$ may include a coordinate $\{e_{j,k}\}$ of a $j^{th}$ element and a polarization mode $\{p_{j,k}\}$, where $j \in [1,J]$. The Huygens equivalent surface blueprint may select all or some of the elements from all the J elements and set the elements in an active state, and different Huygens equivalent surface blueprints $k_1$, $k_2$, ..., and $k_R$ may include all or some of the elements with the same coordinates.

For example, an excitation scheme $F_{k1}$ corresponding to a $k_1^{th}$ Huygens blueprint includes an element coordinate $\{e_{1,k1}, e_{2,k1}, ..., e_{j,k1}\}$, a polarization mode $\{p_{1,k1}, p_{2,k1}, ..., p_{j,k1}\}$, and an excitation signal $\{s_{1,k1}, s_{2,k1}, ..., s_{j,k1}\}$. In particular, when $s_{j,k1} = 0$, it indicates that the $j^{th}$ element is not selected by the $k_1^{th}$ Huygens blueprint, and the $j^{th}$ element is in an inactive state.

$e_{j,k} = (x_{j,k}, y_{j,k}, z_{j,k})$, $x_{j,k}$ is an X-axis spatial coordinate of the $j^{th}$ element selected by the $k^{th}$ blueprint, $y_{j,k}$ is a Y-axis spatial coordinate, and $z_{j,k}$ is a Z-axis spatial coordinate.

$p_{j,k} = a_{j,k} \cdot \hat{p}_1 + b_{j,k} \cdot \hat{p}_2 + c_{j,k} \cdot \hat{p}_3$, $a_{j,k}$ is a weight coefficient in an X-polarization direction of the $j^{th}$ element selected by the $k^{th}$ blueprint, $b_{j,k}$ is a weight coefficient in a Y-polarization direction, and $c_{j,k}$ is a weight coefficient in a Z-polarization direction. $\hat{p}_1$ is a unit direction vector in the X-polarization direction, $\hat{p}_2$ is a unit direction vector in the Y-polarization direction, and $\hat{p}_3$ is a unit direction vector in the Z-polarization direction.

$s_{j,k} = d_{j,k} + i \cdot f_{j,k}$, where $i = \sqrt{-1}$ is an imaginary symbol, $d_{j,k}$ is a real part of an excitation signal of the $j^{th}$ element selected by the $k^{th}$ blueprint, and $f_{j,k}$ is a real part of the excitation signal.

Similarly, the transmit end may determine an excitation configuration of another Huygens equivalent surface blueprint. For example, excitation configurations of R Huygens equivalent surface blueprints are denoted as $F_{k1}$, $F_{k2}$, ..., and $F_{kR}$, respectively.

Further, if the first indication information includes indication information of a plurality of Huygens equivalent surfaces, the transmit end may perform weighted summation on excitation schemes of the plurality of Huygens blueprints, and use a calculation result as a precoding scheme for subsequently sending wanted user data, to further improve reliability of determining the precoding scheme.

For example, the precoding scheme is represented as G, and meets the following formula 1:

$$G = F_{k1} \cup F_{k2} \cup ... \cup F_{kR} = \sum_k \sum_j \rho(k, \eta) \cdot e_{j,k} \cdot p_{j,k} \cdot s_{j,k}^* \quad \text{(Formula 1)}$$

$s_{j,k}^*$ represents a complex conjugate of $s_{j,k}$, that is, $s_{j,k}^* = d_{j,k} - i \cdot f_{j,k}$.

An advantage of conjugate of $s_{j,k}$ is spatial filtering, used to cancel an adverse effect caused by blocking or scattering of a lower-layer element waveform by an upper-layer element when an incident or emergent signal passes through a multi-layer antenna.

After determining the precoding scheme G, the transmit end may set a transmit antenna based on the precoding scheme G, and send a signal and/or data to the receive end by using the set transmit antenna. Optionally, the transmit end may indicate the precoding scheme G to the receive end, so that the receive end receives a signal and/or data based on the precoding scheme, to improve signal receiving efficiency and communication reliability. It may be understood that, an indication manner of the precoding scheme G is not within the limitation scope of this application.

According to the method shown in FIG. 11, it may be understood that, the first receiving signal is affected by a transmit antenna configuration, wireless channel propagation, and a receive antenna configuration together, where the first Huygens equivalent surface may correspond to the receive antenna configuration at the receive end, that is, the receive antenna configuration may be considered known to the receive end. After the second Huygens equivalent surface is obtained, the receive end learns of a comprehensive effect that is jointly affected by the transmit antenna configuration, the wireless channel propagation, and the receive antenna configuration, and the comprehensive effect is the second Huygens equivalent surface. In addition, the receive end learns of the receive antenna configuration, and therefore may determine a comprehensive effect of the transmit antenna configuration and the wireless channel propagation. Further, by using S102, the receive end may send the first indication information to the transmit end, where the first indication information may indicate a comprehensive effect of the transmit antenna configuration and the wireless channel propagation. Because the transmit end learns of the transmit antenna configuration, the transmit end can determine an effect of wireless channel propagation, that is, learn of channel information, to better adapt to wireless channel characteristics, and make more full use of the degree of freedom of the channel and the energy of the electromagnetic wave in all directions. For example, optionally, the transmit end (for example, a base station) may determine, based on the channel information, the receive antenna configuration and the transmit antenna configuration that make more full use of the degree of freedom of the channel and the energy of the electromagnetic wave in all directions, and adjust a local next transmit antenna configuration, and/or indicate, to the receive end by using the second indication information, a next receive antenna configuration that the receive end expects to use.

In an implementation of this application, the receive end may receive a plurality of receiving signals at a plurality of instantaneous moments, determine a plurality of second Huygens equivalent surfaces when the plurality of receiving signals are received, and send feedback information for a plurality of times based on the plurality of second Huygens equivalent surfaces at the plurality of instantaneous moments. It may be understood that, the first receiving signal in S101 is one of plurality of receiving signals received at the plurality of instantaneous moments, the first indication information in S102 is one of pieces of feedback information sent for a plurality of times, and the second Huygens equivalent surface corresponding to the first indication information is one of the plurality of second Huygens equivalent surfaces corresponding to the plurality of receiving signals. It may be further understood that, for a manner in which the receive end obtains the plurality of second Huygens equivalent surfaces, refer to the descriptions of determining the second Huygens equivalent surface by the receive end in this application. For a plurality of pieces of feedback information, refer to the descriptions of the first indication information.

In this application, a purpose of sending the feedback information by the receive end for a plurality of times is to reflect, considering that a wireless channel significantly changes with time, a time-varying characteristic of the wireless channel in a period of time by using a plurality of times of feedback, to predict a wireless channel in a next period of time based on the time-varying characteristic, and further improve accuracy of a precoding scheme used for subsequently sending application data. A reason why the wireless channel significantly changes with time includes but is not limited to a change of an ambient environment, a position movement of the terminal device relative to the network device, and the like. Due to an effect generated by a time-varying wireless channel, a virtual current element $(\overrightarrow{J_s})$ and a magnetic current element $(\overrightarrow{M_s})$ of a Huygens surface at the receive end also change with time and space. Therefore, the indication information of the Huygens equivalent surface that is fed back for a plurality of times within a period of time may represent the time-varying characteristic of the wireless channel. Theoretically, the Huygens equivalent surface varies in a range of a coherent time (coherence time) and coherent space (coherence space) of a time-varying wireless channel, but the time and surrounding space are highly similar and correlated. There is a change rule that can be calculated theoretically.

Optionally, the receive end may determine N receiving signals within the period of coherence time, where N is a positive integer greater than 1, and determine the second Huygens equivalent surface based on each receiving signal. The receive end may further determine the feedback information based on each second Huygens equivalent surface. For example, the feedback information corresponding to each second Huygens equivalent surface is shown as the foregoing first indication information. For example, each piece of feedback information includes an index of at least one Huygens equivalent surface and at least one of a cross correlation coefficient, a compression rate, and a solid angle range corresponding to the index. Therefore, it may be understood that, the first receiving signal is a receiving signal received by the receive end in an $n^{th}$ transmission cycle of the period of coherence time, where $1 \leq n \leq N$, and n is a positive integer.

Optionally, the receive end may predict, based on a change trend of m consecutive solid angle ranges in solid angle ranges corresponding to N second Huygens equivalent surfaces, a solid angle range of a Huygens equivalent surface at a next sampling moment or a next period of time, to improve efficiency and reliability of determining the solid angle range. It is assumed that a position of a network device (for example, a base station) remains unchanged, and a user holds a terminal device and moves slowly by walking. In this case, a relative position and a relative angle between the network device and the terminal device also change slowly. Therefore, in a prediction manner, an optimal region of interest (that is, a solid angle range) of a Huygens equivalent surface in a period of time may be determined in advance, to mitigate deterioration of received signal quality caused by terminal movement.

Further, optionally, the N receiving signals are respectively received in the N transmission cycles of the period of coherence time. The coherence time may include the N transmission cycles, where the N transmission cycles have an equal length. For example, the coherence time includes the N transmission cycles, or duration of the coherence time is greater than duration of the N transmission cycles. For example, time domain positions of the N receiving signals received by the receive end are located at a start moment of the N transmission cycles. For example, the 1st receiving signal is located at a start moment of the 1st transmission cycle of the period of coherence time, the 2nd receiving signal is located at a start moment of the 2nd receiving signal of the period of coherence time, and so on. Alternatively, a time domain position of a receiving signal may be a specific time-offset value away from a start moment of a transmission cycle. This is not specifically required.

In an example, the N receiving signals may be received at an equal time interval. Therefore, it may also be understood that, the receive end receives the N receiving signals at N sampling moments within the period of coherence time. The N sampling moments may be distributed at an equal time interval, and the time interval may be denoted as $\Delta t$.

The following describes a manner of determining the coherence time by using an example.

For example, the terminal device is used as a receive end. The receive end may measure a moving speed v of a local terminal, and then report (or indicate or notify) the speed v or a period of coherence time $T_c$ determined based on the speed v to a network device as a transmit end by using air interface signaling. A method for determining the moving speed by the receive end includes but is not limited to measuring the moving speed by using a speed sensor, a GPS navigation, a lidar, a millimeter wave radar, or the like. Similarly, if the terminal device is used as a transmit end, the transmit end may perform measurement, and report (or indicate or notify) the speed v or the coherence time $T_c$ to a receive end. In addition, the speed of the terminal device may be measured by the network device. A speed measurement subject is not specifically required in this application.

Optionally, a relationship between the speed v and the coherence time $T_c$ is shown in the following formula:

$$f_d = \frac{v}{\lambda} cos\theta;$$

$$T_c = \frac{0.423}{f_d}.$$

In the formula, v represents a speed of the receive end, $\lambda$ represents a carrier wavelength of the receive end, $\theta$ represents an angle between a speed direction of the receive end and a connection line between the receive end and the transmit end, $\theta$ is an acute angle, and $f_d$ represents a doppler frequency shift. $T_c$ represents a period of coherence time of motion doppler frequency domain. The number 0.423 is an empirical value, and the number can be updated based on an actual scenario. It may be understood that, the carrier wavelength of the receive end may be determined based on a center frequency of the receive end.

Further, the receive end and the transmit end may further agree on N, a length of the N time periods, or a time interval $\Delta t$ between the N sampling moments. For example, in a specific negotiation manner, the receive end sends second information to the transmit end, where the second information indicates N, the length of the N time periods, or the time interval $\Delta t$ between the N sampling moments; or the receive end may receive third information from the transmit end, where the third information indicates N, the length of the N time periods, or the time interval $\Delta t$ between the N sampling moments.

It may be understood that, the receive end may separately calculate the N second Huygens equivalent surfaces, to separately determine indication information of corresponding Huygens equivalent surface blueprints. In a feedback manner, the receive end may separately carry, in the N pieces of feedback information, the indication information of corresponding Huygens equivalent surface blueprints that is separately determined by the N second Huygens equivalent surfaces. In other words, the receive end performs feedback for N times. In another feedback manner, the receive end may carry indication information of a complete Huygens equivalent surface blueprint in feedback information sent for the first time, and carry, in subsequent feedback information, a parameter variation compared with previous feedback information. It may be understood that, the indication information of the complete Huygens equivalent surface blueprint is an index of the Huygens equivalent surface and at least one of a cross correlation coefficient, a compression rate, and a solid angle range corresponding to the index. For example, in subsequent feedback, the receive end may use a graphic compression method. To be specific, by using similarity of a plurality of Huygens equivalent surfaces within a period of coherence time, the receive end carries, in the feedback information, a variation part of indication information of a Huygens equivalent surface blueprint corresponding to a next receiving signal compared with indication information of a Huygens equivalent surface blueprint corresponding to a receiving signal received at a previous moment, and omits feedback of an unchanged part, to save an air interface bandwidth. For example, if the first indication information is not the first piece of feedback information sent by the receive end within the period of coherence time, the first indication information may carry a parameter variation of the indication information of the at least one Huygens equivalent surface determined based on the first Huygens equivalent surface compared with feedback information sent by the receive end last time.

After receiving a plurality of pieces of feedback information corresponding to the coherence time, the transmit end may determine a precoding scheme G based on the plurality of pieces of feedback information.

Herein, several feasible methods for determining the precoding scheme G based on the plurality of pieces of feedback information is described by using an example.

Method 1: The transmit end averages matrices W of N pieces of feedback information to obtain $\overline{W}$, and determines G based on $\overline{W}$ by using the method shown in Formula 1. It may be understood that, for Formula 1, refer to the foregoing descriptions of determining the precoding scheme G. Details are not described herein again.

Method 2: The transmit end determines G based on feedback information $W_N$ corresponding to a last receiving signal in the N receiving signals by using the method shown in Formula 1.

Method 3: The transmit end predicts, based on a change trend of the N pieces of feedback information, feedback information $W_{N+1}$ corresponding to a next transmission cycle (or sampling moment) of the $N^{th}$ transmission cycle (or sampling moment), and determines G based on $W_{N+1}$ by using the method shown in Formula 1. A manner of predicting feedback information $W_{N+1}$ is not specifically required in this application.

Method 4: The transmit end separately determines $G_1, G_2, ..., G_N$ based on $W_1, W_2, ..., W_N$ by using the method shown in Formula 1, and periodically performs sending by using $G_1, G_2, ..., G_N$ based on a time interval $\Delta t$.

It may be understood that, Method 1 to Method 4 are merely examples for descriptions, and are not used as a specific limitation on determining the precoding scheme G based on the plurality of pieces of feedback information. Any plurality of manners between Method 1 to Method 4 may also be combined for implementation.

Optionally, in a scenario in which the communication system in this application includes an RIS, if the RIS is enabled, the RIS may convert a Huygens equivalent surface of a transmit antenna at a transmit end into a Huygens equivalent surface of a receive antenna at a receive end. The Huygens equivalent surface of the transmit antenna may be considered as electromagnetic field distribution of a closed surface in three-dimensional space near the transmit antenna when the transmit antenna at the transmit end performs sending. As shown in FIG. 12, when one or more RISs exist between a transmit antenna and a receive antenna, a configuration parameter of the RIS may be manually controlled, so that when a Huygens surface of the transmit antenna arrives at a Huygens equivalent surface of the receive antenna, a structured mapping relationship that facilitates wireless communication is constructed and maintained in spatial geometry. Specifically, the relationship may be mapped to a graphic transformation from pixels of a Huygens equivalent surface Hyg2D at a transmit end to pixels of a Huygens equivalent surface Hyg2D at a receive end shown in FIG. 12. The transformation herein may be a relationship such as translation, rotation, scaling, and stacking.

In this application, the transmit end may communicate with the receive end by using M RISs. In this application, the RIS is not required to have a CSI feedback capability.

It may be understood that, in the RIS scenario, the first receiving signal may be a default reference signal in an enabled state of the RIS, or the first receiving signal may be a default reference signal in a disabled state of the RIS. The RIS herein may be a part or all of the RISs between the transmit end and the receive end.

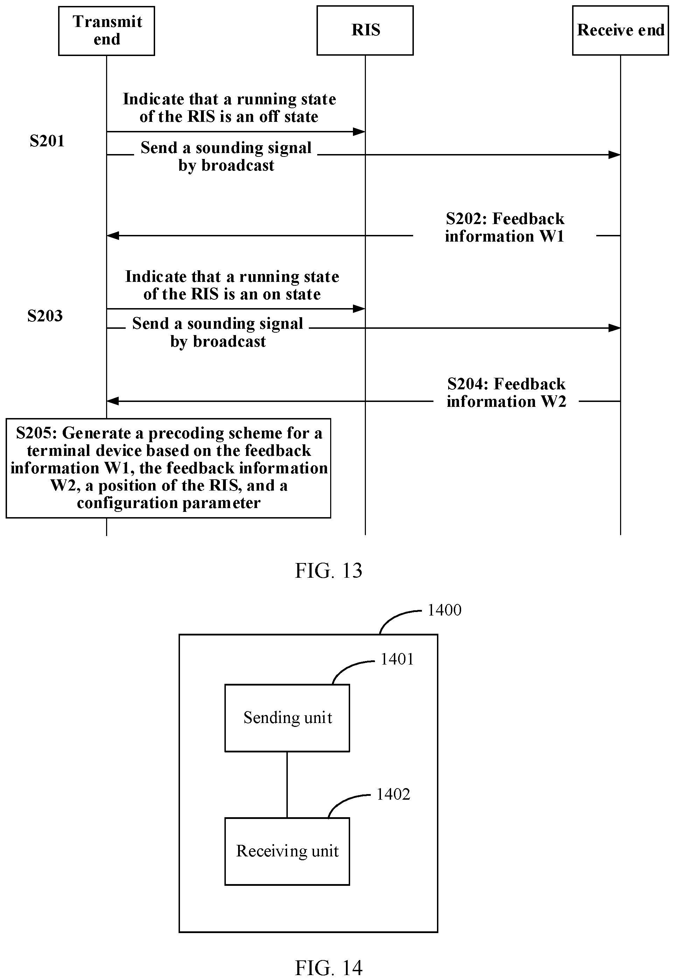

The following describes a method procedure in an RIS scenario according to this application with reference to FIG. 13. As shown in FIG. 13, the procedure may include the following steps.

S201: A network device indicates that a running state of an RIS is a disabled state, and the network device sends a sounding signal by broadcast, so that at least one terminal device can receive the sounding signal.

It may be understood that, the sounding signal received by the terminal device may correspond to the first receiving signal in S101.

S202: At least one terminal device sends feedback information to the network device, where the feedback information is denoted as W1.

For a manner of determining the feedback information, refer to the descriptions of the manner of determining the first indication information in S102. In other words, any terminal device may determine the first receiving signal with reference to the descriptions in S102.

For example, the feedback information in S202 may include the first indication information. For example, any terminal device may feed back one piece of feedback information, and the feedback information is the first indication information shown in S102. For another example, any terminal device may feed back a plurality of pieces of feedback information determined based on a plurality of receiving signals received within a period of coherence time, where the plurality of pieces of feedback information may include the first indication information shown in S102.

S203: The network device indicates that a running state of selected one or more RISs is an enabled state, and broadcasts a sounding signal again.

Optionally, the sounding signal in S201 may be the same as the sounding signal in S203.

Optionally, the RIS in this application supports 1-bit quantization precision.

If the RIS has only two states: 0 and 1 (for example, respectively corresponding to an enabled state and a disabled state), it indicates that the RIS supports only 1-bit quantization precision. If the RIS supports four states: 00, 01, 10, and 11 (for example, corresponding to off, enabling 60° phase shift, enabling 120° phase shift, and enabling 180° phase shift respectively), it indicates that the RIS supports 2-bit quantization precision. By analogy, 3-bit quantization precision may correspond to eight state spaces of the RIS, and 4-bit quantization precision may correspond to 16 state spaces of the RIS. It may be understood that, a larger quantity of bits of quantization precision indicates more hardware costs and overheads.

S204: At least one terminal device sends feedback information to the network device, where the feedback information is denoted as W2.

In S204, the at least one terminal device may be the same as or different from the at least one terminal device in S202. This is not specifically limited. Optionally, if the at least one terminal device involved in S202 and S204 is not completely the same, a distance between the terminal devices is required to be at least far less than a distance between any terminal device and the network device. For example, A much smaller distance indicates that the difference between the two distances is more than 10 times.

Similar to S202, for a manner of determining the feedback information in S204, refer to the descriptions of the manner of determining the first indication information in S102.

It may be understood that, when the running state of the RIS changes from the disabled state to the enabled state, the feedback information W1 and the feedback information W2 fed back by a same terminal device at a same position may be different. It may be understood that, if the RIS supports 2-bit or higher quantization precision, the enabled state herein is replaced with a state in which a phase shift at a specific angle is enabled, and correspondingly, a channel measurement result corresponds to the state. In an actual application, channel measurement results in states in which phase shifts at different angles are enables may be measured by changing a change of an enabled state. An implementation is not described again.

Refer to the descriptions of the first indication information. The feedback information W1 and/or W2 of any terminal device may include the content in Table 3 or Table 4, or include only the blueprint index, or include only the blueprint index and the normalized cross correlation coefficient.

S205: The network device generates a precoding scheme for the terminal device based on the feedback information W1, the feedback information W2, the position of the RIS, and the configuration parameter. A precoding scheme generated by the network device for a $k^{th}$ terminal device may be denoted as $G_k$.

For an $m^{th}$ terminal device and an $n^{th}$ terminal device, in an ideal case, precoding schemes of the $m^{th}$ terminal device and the $n^{th}$ terminal device meet a Kronecker ($\delta$) function, that is, meet the following formula:

$$\langle G_m, G_n \rangle = \sum_j G_{m,j} \cdot G_{n,j} = \delta_{m,n} = \begin{cases} 1, & m = n \\ 0, & m \neq n \end{cases}$$

$G_m$ is a precoding scheme of the $m^{th}$ terminal device, and $G_n$ is a precoding scheme of the $n^{th}$ terminal device.

S206: The network device sends data to the $k^{th}$ UE by using a precoding scheme ($G_k$). When K UEs simultaneously send data at a specific instantaneous moment, a total transmit signal $X$ of the base station is a weighted sum of multi-channel signals, as shown in the following formula:

$$X = \sum_{k=1}^{K} G_k X_k.$$

$X_k$ represents data sent by the $k^{th}$ terminal device, and $1 \leq k \leq K$.

According to the procedure shown in FIG. 13, the method provided in this embodiment of this application may be applied to a scenario in which the transmit end and the receive end communicate with each other by using the RIS, to increase a utilization degree of energy of a wanted signal and a degree of freedom of a spatial channel in the scenario, and improve communication performance.

The foregoing describes the method provided in embodiments of this application. To implement the functions in the method provided in embodiments of this application, a communication apparatus applying a Huygens equivalent surface (which may be referred to as a communication apparatus for short) provided in embodiments of this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. For example, the communication apparatus provided in this application may include the transmit end and the receive end shown in FIG. 5.

As shown in FIG. 14, based on a same technical concept, an embodiment of this application further provides a communication apparatus 1400. The communication apparatus 1400 may be a communication apparatus applying a Huygens equivalent surface, or may be a component in a communication apparatus applying a Huygens equivalent surface, or may be an apparatus that can be used in a matching manner with a communication apparatus applying a Huygens equivalent surface. The communication apparatus applying a Huygens equivalent surface may be a terminal device or a network device. In a design, the communication apparatus 1400 may include a one-to-one corresponding module for performing the method/operation/step/action in the foregoing method embodiment. The module may be a hardware circuit, or may be software, or may be implemented by a hardware circuit in combination with software. In a design, the communication apparatus 1400 may include a sending unit 1401 and a receiving unit 1402. The sending unit 1401 and the receiving unit 1402 may be used as a transceiver unit. Optionally, the communication apparatus 1400 may further include a processing unit, configured to perform the processing action in the foregoing method embodiment. Optionally, the processing unit may be connected to at least one of the sending unit 1401 and the receiving unit 1402. For example, the processing unit may be configured to perform at least one of the following actions: determine a second Huygens equivalent surface, or perform an antenna configuration action related to the foregoing method embodiment, or generate information, data, a message, or a signal sent by the sending unit 1401, or process information, data, a message, or a signal received by the receiving unit 1402.

For example, when the apparatus is configured to perform the method performed by the receive end described in the foregoing embodiment, the apparatus may include the sending unit 1401 and the receiving unit 1402. The receiving unit 1402 may be configured to receive a first receiving signal based on a first Huygens equivalent surface, or the receiving unit 1402 may be configured to perform S101. The sending unit 1401 may be configured to send first indication information, or the sending unit 1401 may be configured to perform S102. For the first receiving signal and the first indication information, refer to the descriptions in the method embodiment of this application.

In addition, optionally, the receiving unit 1402 may be configured to receive second indication information.

Optionally, the apparatus may further include a processing unit, configured to obtain a second Huygens equivalent surface. For example, the processing unit may be configured to obtain the second Huygens equivalent surface based on a first compression rate corresponding to the first Huygens equivalent surface. For the first compression rate, refer to the descriptions in the method embodiment of this application.

Optionally, the receiving unit 1402 may be further configured to receive second information, or the sending unit 1401 may be further configured to send third information. For the second information and the third information, refer to the descriptions in the method embodiment of this application.

For example, when the apparatus is configured to perform the method described in the second aspect, the apparatus may include the receiving unit 1402 and the sending unit 1401. The sending unit 1401 may be configured to send a first receiving signal. The receiving unit 1402 may be configured to receive first indication information. For the first receiving signal and the first indication information, refer to the descriptions in the method embodiment of this application.

In addition, optionally, the sending unit 1401 may be configured to send second indication information.

Optionally, the sending unit 1401 may be further configured to send second information, or the receiving unit 1402 may be further configured to receive third information. For the second information and the third information, refer to the descriptions in the method embodiment of this application.

It may be understood that, during implementation of the procedure shown in FIG. 13, if the communication apparatus 1400 is used as a transmit end, the sending unit 1401 may be configured to perform sending actions shown in S201 and S203, the receiving unit 1402 may be configured to receive the feedback information W1 in S202 and the feedback information W2 in S204, and the processing unit may be configured to perform S205. During implementation of the procedure shown in FIG. 13, if the communication apparatus 1400 is used as a receive end, the sending unit 1401 may be configured to perform sending actions shown in S202 and S204, and the receiving unit 1402 may be configured to receive the sounding signals in S201 and S203.

Division into the modules in embodiments of this application is an example, is merely division into logical functions. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

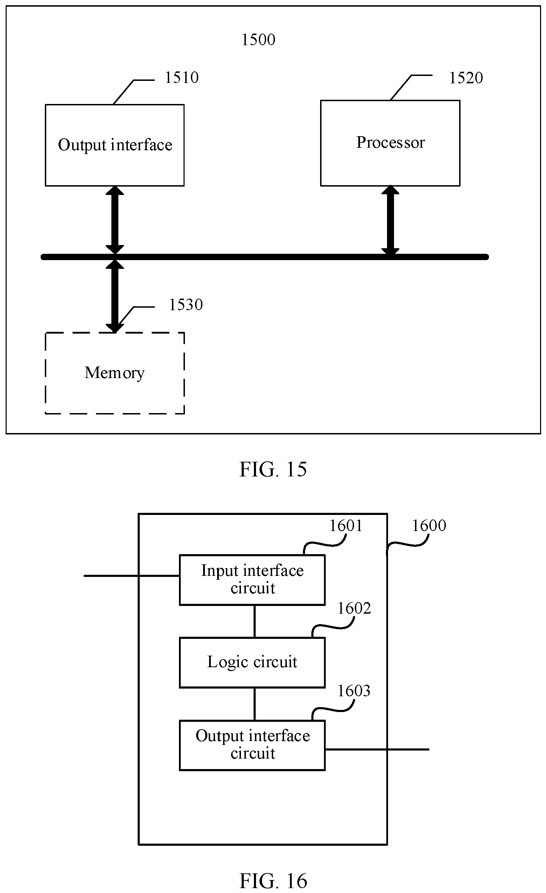

FIG. 15 shows a communication apparatus 1500 according to an embodiment of this application, to implement the communication method applying a Huygens equivalent surface provided in this application. The communication apparatus 1500 may be a communication apparatus applying a Huygens equivalent surface, or may be a component in a communication apparatus applying a Huygens equivalent surface, or may be an apparatus that can be used in a matching manner with a communication apparatus applying a Huygens equivalent surface. The communication apparatus applying a Huygens equivalent surface may be a terminal device or a network device. The communication apparatus 1500 may be a chip system or a chip. In this embodiment of this application, the chip system may include a chip, or may include a chip and another discrete component. The communication apparatus 1500 includes at least one processor 1520, configured to implement the communication method applying a Huygens equivalent surface provided in this embodiment of this application. The communication apparatus 1500 may further include an output interface 1510, and the output interface may alternatively be referred to as an input/output interface. In this embodiment of this application, the output interface 1510 may be configured to communicate with another apparatus by using a transmission medium, and a function of the output interface may include sending and/or receiving. For example, when the communication apparatus 1500 is a chip, the communication apparatus 1500 performs transmission with another chip or component through the output interface 1510. The processor 1520 may be configured to implement the method in the foregoing method embodiment.

For example, when the apparatus is configured to perform the method performed by the receive end described in the foregoing embodiment, the apparatus may include the output interface 1510 and the processor 1520. The output interface 1510 may be configured to receive a first receiving signal based on a first Huygens equivalent surface, or the receiving unit 1402 may be configured to perform S101. The output interface 1510 may be further configured to send first indication information, or the output interface 1510 may be further configured to perform S102. For the first receiving signal and the first indication information, refer to the descriptions in the method embodiment of this application.

In addition, optionally, the output interface 1510 may be configured to receive second indication information.

Optionally, the processor 1520 may be configured to obtain a second Huygens equivalent surface based on a first compression rate corresponding to the first Huygens equivalent surface. For the first compression rate, refer to the descriptions in the method embodiment of this application.

Optionally, the output interface 1510 may be further configured to receive second information, or the output interface 1510 may be further configured to send third information. For the second information and the third information, refer to the descriptions in the method embodiment of this application.

For example, when the apparatus is configured to perform the method described in the second aspect, the apparatus may include an output interface 1510 and a processor 1520. The output interface 1510 may be configured to send a first receiving signal, and may be configured to receive first indication information. For the first receiving signal and the first indication information, refer to the descriptions in the method embodiment of this application.

In addition, optionally, the output interface 1510 may be further configured to send second indication information.

Optionally, the output interface 1510 may be further configured to send second information, or the output interface 1510 may be further configured to receive third information. For the second information and the third information, refer to the descriptions in the method embodiment of this application.

Optionally, the communication apparatus 1500 may further include at least one memory 1530, configured to store program instructions and/or data. The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. The processor 1520 may cooperate with the memory 1530. The processor 1520 may execute the program instructions stored in the memory 1530. At least one of the at least one memory may be integrated with the processor.

In this embodiment of this application, the memory 1530 may be a non-volatile memory, for example, a hard disk drive (hard disk drive, HDD) or a solid-state drive (solid-state drive, SSD), or the like, or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

In this embodiment of this application, the processor 1520 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware in the processor and a software module.

FIG. 16 shows a communication apparatus 1600 according to an embodiment of this application, to implement the communication method applying a Huygens equivalent surface provided in this application. The communication apparatus 1600 may be a communication apparatus applying a Huygens equivalent surface, or may be a component in a communication apparatus applying a Huygens equivalent surface, or may be an apparatus that can be used in a matching manner with a communication apparatus applying a Huygens equivalent surface. The communication apparatus applying a Huygens equivalent surface may be a terminal device or a network device. The data transmission apparatus 1600 may be a chip system or a chip. In this embodiment of this application, the chip system may include a chip, or may include a chip and another discrete component. Some or all of the communication methods applying a Huygens equivalent surface provided in the foregoing embodiments may be implemented by hardware or may be implemented by software. When the communication method is implemented by hardware, the data transmission apparatus 1600 may include an input interface circuit 1601, a logic circuit 1602, and an output interface circuit 1603. Optionally, for example, the apparatus is configured to implement a function of a receive end. The input interface circuit 1601 may be configured to receive a first receiving signal based on a first Huygens equivalent surface, the logic circuit 1602 may be configured to perform a processing action of the receive end, and the output interface circuit 1603 may be configured to send first indication information. For another example, in an example in which the apparatus is configured to implement a function of a transmit end, the logic circuit 1602 may be configured to perform a processing action of the transmit end, the output interface circuit 1603 may be configured to send a first receiving signal, and the input interface circuit 1601 may be configured to receive first indication information.

Optionally, in a specific implementation, the data transmission apparatus 1600 may be a chip or an integrated circuit.

Some or all of the operations and functions performed by the data transmission apparatus according to the foregoing method embodiment of this application may be completed by using the chip or the integrated circuit.

An embodiment of this application provides a computer-readable storage medium storing a computer program. The computer program includes instructions for performing the foregoing method embodiment.

An embodiment of this application provides a computer program product including instructions. When the instructions are run on a computer, the computer is enabled to perform the foregoing method embodiment.

An embodiment of this application provides a communication system. Specifically, the communication system may include a receive end and a transmit end that are configured to implement the method shown in FIG. 11. For details, refer to the related descriptions in the method embodiment. Details are not described herein again. The communication system may include the structure shown in FIG. 1 or FIG. 5.

A person skilled in the art should understand that, embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that, computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application are described, a person skilled in the art can make changes and modifications to embodiments after he/she learns of a basic inventive concept. Therefore, the following claims are intended to be construed as to cover the preferred embodiments and all changes and modifications falling within the scope of this application.

It is clear that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

**Claims**

1. A communication method applying a Huygens equivalent surface, comprising:

   receiving a first receiving signal based on a first Huygens equivalent surface; and
   sending first indication information, wherein the first indication information comprises indication information of at least one Huygens equivalent surface, the indication information of the at least one Huygens equivalent surface is determined based on a second Huygens equivalent surface, and the second Huygens equivalent surface corresponds to the first receiving signal.

2. The method according to claim 1, wherein the second Huygens equivalent surface is an electric field vector and/or a magnetic field vector of a closed surface in three-dimensional space in which a receive antenna is located, and the method further comprises:
   receiving second indication information, wherein the second indication information indicates that the first Huygens equivalent surface is the electric field vector and/or the magnetic field vector of the closed surface in three-dimensional space in which the receive antenna is located.

3. The method according to claim 1 or 2, wherein the indication information of any one of the Huygens equivalent surfaces comprises an index of the Huygens equivalent surface and at least one of the following parameters corresponding to the index: a normalized cross correlation coefficient between the Huygens equivalent surface and the second Huygens equivalent surface, a compression rate, and a solid angle range.

4. The method according to claim 3, wherein a larger absolute value of the normalized cross correlation coefficient indicates a higher transmission priority of the indication information of the Huygens equivalent surface.

5. The method according to any one of claims 1 to 4, wherein the method further comprises:
obtaining the second Huygens equivalent surface based on a first compression rate corresponding to the first Huygens equivalent surface, wherein the first compression rate is related to a size of a solid angular granularity of the second Huygens equivalent surface, and the first compression rate is greater than 0 and less than or equal to 1.

6. The method according to any one of claims 1 to 5, wherein the first receiving signal is a receiving signal received in an $n^{th}$ transmission cycle of a period of coherence time, the coherence time comprises N transmission cycles, $1 \leq n \leq N$, and n is an integer.

7. The method according to claim 6, wherein the method further comprises:

receiving second information, wherein the second information indicates N and/or a time interval between the N transmission cycles; or
sending third information, wherein the second information indicates N and/or a time interval between the N transmission cycles.

8. The method according to claim 6 or 7, wherein the first indication information comprises a parameter variation of the indication information of the at least one Huygens equivalent surface relative to feedback information sent last time.

9. The method according to any one of claims 1 to 8, wherein the first receiving signal comprises a first reference signal, and the first reference signal is a default reference signal in an enabled state of a reconfigurable intelligent surface RIS; or
the first receiving signal comprises a second reference signal, and the second reference signal is a default reference signal in a disabled state of an RIS.

10. A communication method applying a Huygens equivalent surface, comprising:

sending a first receiving signal; and
receiving first indication information, wherein the first indication information comprises indication information of at least one Huygens equivalent surface, the indication information of the at least one Huygens equivalent surface is determined based on a second Huygens equivalent surface, and the second Huygens equivalent surface corresponds to the first receiving signal.

11. The method according to claim 10, wherein the second Huygens equivalent surface is an electric field vector and/or a magnetic field vector of a closed surface in three-dimensional space in which a receive antenna is located, and the method further comprises:
sending second indication information, wherein the second indication information indicates that the first Huygens equivalent surface is the electric field vector and/or the magnetic field vector of the closed surface in three-dimensional space in which the receive antenna is located.

12. The method according to claim 10 or 11, wherein the indication information of any one of the Huygens equivalent surfaces comprises an index of the Huygens equivalent surface and at least one of the following parameters corresponding to the index: a normalized cross correlation coefficient between the Huygens equivalent surface and the second Huygens equivalent surface, a compression rate, and a solid angle range.

13. The method according to claim 12, wherein a larger absolute value of the normalized cross correlation coefficient indicates a higher transmission priority of the indication information of the Huygens equivalent surface.

14. The method according to any one of claims 10 to 13, wherein the second Huygens equivalent surface is obtained based on a first compression rate, the first compression rate is related to a size of a solid angular granularity of the second Huygens equivalent surface, and the first compression rate is greater than 0 and less than or equal to 1.

15. The method according to any one of claims 10 to 14, wherein the first receiving signal is a receiving signal received in an $n^{th}$ transmission cycle of a period of coherence time, the coherence time comprises N transmission cycles, $1 \leq n \leq N$, and n is an integer.

16. The method according to claim 15, wherein the method further comprises:

sending second information, wherein the second information indicates N and/or a time interval between the N transmission cycles; or
receiving third information, wherein the second information indicates N and/or a time interval between the N transmission cycles.

17. The method according to claim 15 or 16, wherein the first indication information comprises a parameter variation of the indication information of the at least one Huygens equivalent surface relative to feedback information sent last time.

18. The method according to any one of claims 10 to 17, wherein the first receiving signal comprises a first reference signal, and the first reference signal is a default reference signal in an enabled state of a reconfigurable intelligent surface RIS; or
the first receiving signal comprises a second reference signal, and the second reference signal is a default reference signal in a disabled state of an RIS.

19. A communication apparatus applying a Huygens equivalent surface, comprising:

a receiving unit, configured to receive a first receiving signal based on a first Huygens equivalent surface; and
a sending unit, configured to send first indication information, wherein the first indication information comprises indication information of at least one Huygens equivalent surface, the indication information of the at least one Huygens equivalent surface is determined based on a second Huygens equivalent surface, and the second Huygens equivalent surface corresponds to the first receiving signal.

20. The apparatus according to claim 19, wherein the second Huygens equivalent surface is an electric field vector and/or a magnetic field vector of a closed surface in three-dimensional space in which a receive antenna is located, and the receiving unit is further configured to:
receive second indication information, wherein the second indication information indicates that the first Huygens equivalent surface is the electric field vector and/or the magnetic field vector of the closed surface in three-dimensional space in which the receive antenna is located.

21. The apparatus according to claim 19 or 20, wherein the indication information of any one of the Huygens equivalent surfaces comprises an index of the Huygens equivalent surface and at least one of the following parameters corresponding to the index: a normalized cross correlation coefficient between the Huygens equivalent surface and the second Huygens equivalent surface, a compression rate, and a solid angle range.

22. The apparatus according to claim 21, wherein a larger absolute value of the normalized cross correlation coefficient indicates a higher transmission priority of the indication information of the Huygens equivalent surface.

23. The apparatus according to any one of claims 19 to 22, wherein the apparatus further comprises:
a processing unit, configured to obtain the second Huygens equivalent surface based on a first compression rate corresponding to the first Huygens equivalent surface, wherein the first compression rate is related to a size of a solid angular granularity of the second Huygens equivalent surface, and the first compression rate is greater than 0 and less than or equal to 1.

24. The apparatus according to any one of claims 19 to 23, wherein the first receiving signal is a receiving signal received in an $n^{th}$ transmission cycle of a period of coherence time, the coherence time comprises N transmission cycles, $1 \leq n \leq N$, and n is an integer.

25. The apparatus according to claim 24, wherein the receiving unit is further configured to:

receive second information, wherein the second information indicates N and/or a time interval between the N transmission cycles; or

the sending unit is further configured to:

send third information, wherein the second information indicates N and/or a time interval between the N transmission cycles.

26. The apparatus according to claim 24 or 25, wherein the first indication information comprises a parameter variation of the indication information of the at least one Huygens equivalent surface relative to feedback information sent last time.

27. The apparatus according to any one of claims 19 to 26, wherein the first receiving signal comprises a first reference signal, and the first reference signal is a default reference signal in an enabled state of a reconfigurable intelligent surface RIS; or

the first receiving signal comprises a second reference signal, and the second reference signal is a default reference signal in a disabled state of an RIS.

28. A communication apparatus applying a Huygens equivalent surface, comprising:

a sending unit, configured to send a first receiving signal; and

a receiving unit, configured to receive first indication information, wherein the first indication information comprises indication information of at least one Huygens equivalent surface, the indication information of the at least one Huygens equivalent surface is determined based on a second Huygens equivalent surface, and the second Huygens equivalent surface corresponds to the first receiving signal.

29. The apparatus according to claim 28, wherein the second Huygens equivalent surface is an electric field vector and/or a magnetic field vector of a closed surface in three-dimensional space in which a receive antenna is located, and the sending unit is further configured to:

send second indication information, wherein the second indication information indicates that the first Huygens equivalent surface is the electric field vector and/or the magnetic field vector of the closed surface in three-dimensional space in which the receive antenna is located.

30. The apparatus according to claim 28 or 29, wherein the indication information of any one of the Huygens equivalent surfaces comprises an index of the Huygens equivalent surface and at least one of the following parameters corresponding to the index: a normalized cross correlation coefficient between the Huygens equivalent surface and the second Huygens equivalent surface, a compression rate, and a solid angle range.

31. The apparatus according to claim 30, wherein a larger absolute value of the normalized cross correlation coefficient indicates a higher transmission priority of the indication information of the Huygens equivalent surface.

32. The apparatus according to any one of claims 28 to 31, wherein the second Huygens equivalent surface is obtained based on a first compression rate, the first compression rate is related to a size of a solid angular granularity of the second Huygens equivalent surface, and the first compression rate is greater than 0 and less than or equal to 1.

33. The apparatus according to any one of claims 28 to 32, wherein the first receiving signal is a receiving signal received in an $n^{th}$ transmission cycle of a period of coherence time, the coherence time comprises N transmission cycles, $1 \leq n \leq N$, and n is an integer.

34. The apparatus according to claim 33, wherein the sending unit is further configured to:

send second information, wherein the second information indicates N and/or a time interval between the N transmission cycles; or

the receiving unit is further configured to:

receive third information, wherein the second information indicates N and/or a time interval between the N transmission cycles.

35. The apparatus according to claim 33 or 34, wherein the first indication information comprises a parameter variation of the indication information of the at least one Huygens equivalent surface relative to feedback information sent last time.

36. The apparatus according to any one of claims 28 to 35, wherein the first receiving signal comprises a first reference signal, and the first reference signal is a default reference signal in an enabled state of a reconfigurable intelligent surface RIS; or
the first receiving signal comprises a second reference signal, and the second reference signal is a default reference signal in a disabled state of an RIS.

37. A communication apparatus, comprising: a processor and a memory, wherein the memory is configured to store one or more computer programs, the one or more computer programs comprise computer-executable instructions, and when the communication apparatus is run, the processor executes the one or more computer programs stored in the memory, so that the communication apparatus is enabled to perform the method according to any one of claims 1 to 9, or the communication apparatus is enabled to perform the method according to any one of claims 10 to 18.

38. A chip system, wherein the chip system comprises a logic circuit and an input/output interface, wherein

the input/output interface is configured to communicate with another communication apparatus outside the chip system, and the logic circuit is configured to perform the method according to any one of claims 1 to 9; or
the input/output interface is configured to communicate with another communication apparatus outside the chip system, and the logic circuit is configured to perform the method according to any one of claims 10 to 18.

39. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 18.

40. A computer program product, wherein the computer program product comprises a computer program, and when the computer program is run on a computer, the computer is enabled to perform the method according to any one of claims 1 to 9, or the computer is enabled to perform the method according to any one of claims 10 to 18.

41. A communication system, comprising a receive end and a transmit end, wherein the receive end is configured to perform the method according to any one of claims 1 to 9, and the transmit end is configured to perform the method according to any one of claims 10 to 18.

FIG. 1

FIG. 2

FIG. 3

FIG. 4

EP 4 550 580 A1

**Transmit end**

Signal source → Baseband processor 1 → Amplifier 1 → Frequency mixer 1 → Filter 1 → Amplifier 2 → Antenna configuration module 1 → Antenna 1

Radio wave transmit

Storage unit module 1

Calculation unit module 1

Oscillator 1

Wireless channel

Radio wave input

Antenna 2

**Receive end**

Antenna configuration module 2 → Amplifier 3 → Filter 2 → Frequency mixer 2 → Filter 3 → Amplifier 4 → Baseband processor 2 → Signal sink

Oscillator 2

Storage unit module 2

Calculation unit module 2

FIG. 5

**Region I**
**(excitation field)**

$\overrightarrow{M_s}$

**Region II**
**(target field)**

$\overrightarrow{E_1}, \overrightarrow{H_1}$

$\overrightarrow{E_2}, \overrightarrow{H_2}$

**Source** ○ ○ ○
○ ○ ○
○ ○ ○

$\overrightarrow{J_s}$

**S**

$\hat{n}$

FIG. 6

1
2
n
N

1 2 m M

L
2
1

y
z
x

FIG. 7

| Number | Geometric topology | Element coordinate (p to be determined) |
|---|---|---|
| 1 | | (1, 1, 1) One point |
| 2 | | (1:M, 1, 1) One line in an X direction |
| 3 | | (1, 1:N, 1) One line in a Y direction |
| 4 | | (1, 1, 1:L) One line in a Z direction |
| 5 | | (1, 1, 1) (2, 1, 1) (1, 2, 1) (2, 2, 1) |
| 6 | | (1, 1, 1) (2, 1, 1) (1, 2, 1) (2, 2, 1)<br>(1, 1, 2) (2, 1, 2) (1, 2, 2) (2, 2, 2) |
| 7 | | (1, 1, 1) (2, 1, 1) (3, 1, 1) (2, 1, 1) (2, 2, 1) (2, 3, 1) (3, 1, 1) (3, 2, 1) (3, 3, 1) |
| 8 | | (1, 1, 1) (2, 1, 1) (3, 1, 1) (2, 1, 1) (2, 2, 1) (2, 3, 1) (3, 1, 1) (3, 2, 1) (3, 3, 1)<br>(1, 1, 2) (2, 1, 2) (3, 1, 2) (2, 1, 2) (2, 2, 2) (2, 3, 2) (3, 1, 2) (3, 2, 2) (3, 3, 2)<br>(1, 1, 3) (2, 1, 3) (3, 1, 3) (2, 1, 3) (2, 2, 3) (2, 3, 3) (3, 1, 3) (3, 2, 3) (3, 3, 3) |
| … | … | … |

FIG. 8

FIG. 9(a)

FIG. 9(b)

FIG. 9(c)

Electric field amplitude

FIG. 9(d)

FIG. 10(a)

FIG. 10(b)

FIG. 10(c)

| Transmit end | | Receive end |
|---|---|---|

S101: Receive a first receiving signal based on a first Huygens equivalent surface

S102: First indication information, including indication information of at least one Huygens equivalent surface

FIG. 11

Huygens equivalent surface of a transmit antenna

R I S 1

R I S 2

Huygens equivalent surface of a receive antenna

FIG. 12

Transmit end | RIS | Receive end

S201

Indicate that a running state of the RIS is an off state

Send a sounding signal by broadcast

S202: Feedback information W1

Indicate that a running state of the RIS is an on state

S203

Send a sounding signal by broadcast

S204: Feedback information W2

S205: Generate a precoding scheme for a terminal device based on the feedback information W1, the feedback information W2, a position of the RIS, and a configuration parameter

**FIG. 13**

1400

1401

Sending unit

1402

Receiving unit

**FIG. 14**

1500

1510

Output interface

1520

Processor

1530

Memory

FIG. 15

1601    1600

Input interface circuit

1602

Logic circuit

1603

Output interface circuit

FIG. 16

# INTERNATIONAL SEARCH REPORT

| International application No. |
|---|
| **PCT/CN2022/103196** |

| A. | CLASSIFICATION OF SUBJECT MATTER |
|---|---|
| | H01Q 15/00(2006.01)i |

According to International Patent Classification (IPC) or to both national classification and IPC

| B. | FIELDS SEARCHED |
|---|---|

Minimum documentation searched (classification system followed by classification symbols)

H01Q; H04L; H04W

Documentation searched other than minimum documentation to the extent that such documents are included in the fields searched

Electronic data base consulted during the international search (name of data base and, where practicable, search terms used)

EPODOC, WPI, CNPAT, CNKI: 惠更斯, 等效面, 表面, 图案, 通信, 指示, 更新, 配置, 应用, 接收信号, huygens, equivalent, surface, pattern, communication, indicat+, updat+, configurat+, use, receiv+, signal

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 107394370 A (SOUTHEAST UNIVERSITY) 24 November 2017 (2017-11-24) description, paragraphs [0022]-[0040] | 1-41 |
| A | US 2019372234 A1 (SEARETE LLC) 05 December 2019 (2019-12-05) entire document | 1-41 |
| A | CN 109634086 A (TSINGHUA UNIVERSITY) 16 April 2019 (2019-04-16) entire document | 1-41 |
| A | CN 114336072 A (CHONGQING UNIVERSITY) 12 April 2022 (2022-04-12) entire document | 1-41 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 December 2022** | **27 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/103196** |

| Patent document cited in search report | | | Publication date (day/month/year) | Patent family member(s) | | | Publication date (day/month/year) |
|---|---|---|---|---|---|---|---|
| CN | 107394370 | A | 24 November 2017 | None | | | |
| US | 2019372234 | A1 | 05 December 2019 | WO | 2018071808 | A1 | 19 April 2018 |
| CN | 109634086 | A | 16 April 2019 | None | | | |
| CN | 114336072 | A | 12 April 2022 | None | | | |

Form PCT/ISA/210 (patent family annex) (January 2015)